(19) Europäisches Patentamt / European Patent Office / Office européen des brevets

(11) **EP 3 625 272 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(21) Anmeldenummer: **18724561.8**

(22) Anmeldetag: **16.05.2018**

(51) Int Cl.:
*C08F 8/20* (2006.01)      *C08F 297/04* (2006.01)
*C08L 53/02* (2006.01)      *C08L 15/02* (2006.01)
*C09K 21/14* (2006.01)      *C08L 101/12* (2006.01)
*C08L 25/04* (2006.01)      *C08J 9/00* (2006.01)
*C08L 25/06* (2006.01)      *C08F 287/00* (2006.01)
*C08F 212/08* (2006.01)      *C08L 51/00* (2006.01)
*C08J 9/12* (2006.01)       *C08J 9/232* (2006.01)
*C08J 9/16* (2006.01)       *C08J 9/14* (2006.01)
*C08J 9/20* (2006.01)

(86) Internationale Anmeldenummer:
**PCT/EP2018/062806**

(87) Internationale Veröffentlichungsnummer:
**WO 2018/210965 (22.11.2018 Gazette 2018/47)**

(54) **BROMIERTE FLAMMSCHUTZMITTEL**

BROMINATED FLAME RETARDANTS

RETARDATEURS DE FLAMME BROMÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2017 EP 17171490**

(43) Veröffentlichungstag der Anmeldung:
**25.03.2020 Patentblatt 2020/13**

(73) Patentinhaber: **BASF SE**
**67056 Ludwigshafen am Rhein (DE)**

(72) Erfinder:
• **KNOLL, Konrad**
  **67056 Ludwigshafen (DE)**
• **BELLIN, Ingo**
  **67056 Ludwigshafen (DE)**
• **HOLOCH, Jan**
  **67056 Ludwigshafen (DE)**
• **NEUFELD, Eckhard**
  **67056 Ludwigshafen (DE)**

(74) Vertreter: **BASF IP Association**
**BASF SE**
**GBI-C006**
**67056 Ludwigshafen (DE)**

(56) Entgegenhaltungen:
EP-A1- 3 070 118      WO-A1-2007/058736
WO-A1-2018/007602

• **BEACH MARK W ET AL: "Development of a new class of brominated polymeric flame retardants based on copolymers of styrene and polybutadiene", POLYMER DEGRADATION AND STABILITY, Bd. 135, 10. Januar 2017 (2017-01-10), Seiten 99-110, XP029854639, ISSN: 0141-3910, DOI: 10.1016/J.POLYMDEGRADSTAB.2016.11.008**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft bromierte Vinylaromat/Dien- Blockcopolymere (Br-SBC), ein Verfahren zu deren Herstellung und deren Verwendung als flammhemmendes Additiv, sowie Zusammensetzungen enthaltend geschäumte oder ungeschäumte thermoplastische Polymere, insbesondere Polystyrole wie EPS und XPS, und eine flammhemmende Menge der erfindungsgemäßen bromierten Blockcopolymere.

Hexabromcyclododecan (HBCD), ein häufig verwendetes Flammschutzmittel (FR)-Additiv, wurde in verschiedenen Studien als Risiko für die Umwelt bewertet, so dass entsprechende Vorschriften der Behörden zur Senkung derartiger Risiken einen Anreiz bieten, einen Ersatz für HBCD zu finden.

Potenziell geeignet sind solche FR-Additive, die mit den zur Verwendung vorgesehenen Schaumstoffen (wie z.B. expandierbarem Polystyrol) und Schäumungsmitteln, die beim Schäumen verwendet werden, kompatibel sind, d.h. die FR-Additive dürfen keine nachteiligen Wirkungen auf die Bildung von Schaumzellen und die Schaumzellgröße haben.

Darüber hinaus ist es wünschenswert, dass FR-Additive die Fähigkeit haben, die Grenzwert-Sauerstoff-Index (LOI) -Werte von in der Schmelze gefertigten Formkörpern wie Schaumstoffen, Fasern, Folien, Blättern und Rohren zu erhöhen, wodurch es ermöglicht wird, dass solche Formkörper Standard-Brandversuche durchlaufen. Beispielsweise erhöht der Einbau von HBCD in eine Formulierung zur Herstellung von extrudiertem Polystyrolschaum (XPS), den LOI des erhaltenen Schaumstoffs von 19 (in Abwesenheit von HBCD) auf mehr als 25. Ein LOI > 25 ermöglicht es mit XPS-Schaumstoffen, Standard-Brandversuche durchzuführen, wie z.B. Underwriters Laboratory (UL) 723 und European Norm (EN) Fire Test # ISO 11925-2 Klasse E.

In der Literatur wird vielfach die Synthese von bromierten Polybutadien-Homopolymeren (Br-PBD) erwähnt, die unter Verwendung von elementarem Brom als Bromierungsmittel hergestellt wurden (z.B. DD- Patent 137308, DE-OS 1 301 497). Die thermische Stabilität und Kompatibilität dieser Br-PBDs unter typischen Schmelzverarbeitungsbedingungen ist aber nicht ausreichend, um als Ersatz für HBCD nützlich zu sein.

WO 2007/058736 beschreibt bromierte Vinylaromat/Dien-Blockcopolymere (Br-SBC) und deren Verwendung als FR-Additiv, insbesondere in Blends mit Styrol(co)polymeren wie GPPS oder SAN und daraus hergestellten Schäumen. Die Br-SBCs weisen einen vinylaromatischen Monomergehalt von 5 bis 90 Gew.-%, einen Gehalt an 1,2-Butadien-Isomeren von mehr als 0 Gew.-%, vorzugsweise mehr als 50 bis mehr als 90 Gew.-% (bezogen auf Gesamtbutadiengehalt) auf, und deren gewichtsmittlere Molmasse Mw beträgt 1000 bis 200.000 g/mol, vorzugsweise 50.000 bis 100.000 g/mol.

Mehr als 50% der darin enthaltenen Butadien-Wiederholungseinheiten sind bromiert. Für die Bromierung geeignete SBCs sind insbesondere Di-Block- (Styrol-Butadien) oder Tri-Blockcopolymere (Styrol/Butadien/Styrol). Für Blends mit Vinylaromat(co)polymeren beträgt der Styrolblockgehalt der SBCs mindestens 10 bis 15 Gew.-%, vorzugsweise mindestens 30 Gew.-%.

In WO 2008/021417 werden entsprechende symmetrische bromierte S-B-S-Triblock-copolymere (Mw 135.830 g/mol; 82% der Dien-Einheiten bromiert) beschrieben. Der Anteil des Polybutadienblocks im Triblockcopolymer beträgt 60 Gew.-%; der Anteil der terminalen Polystyrolblöcke jeweils 20 Gew.-%.

WO 2015/065393 offenbart eine geschäumte Polymermischung enthaltend (a) ein thermoplastisches Styrol(co)polymer, (b) ein bromiertes S-B-S-Triblockcopolymer als FR-Additiv und als weiteres Additiv (c) ein nicht bromiertes S-B-Diblock- oder bevorzugt S-B-S-Triblock-copolymer. Triblockcopolymer (b) hat eine Molmasse von 100.000 bis 160.000 g/mol und enthält 64 Gew.-% gebundenes Brom. Die vorgenannten bromierten SBC-Blockcopolymere haben den Nachteil, dass sie nur unzureichend, d.h. nicht homogen, mit den Vinylaromatmatrix(co)polymeren mischbar sind, so dass sie oftmals eine Keimbildung (Nukleation) bei der Herstellung expandierter Polystyrolschaumstoffe bewirken, die zu einer reduzierten Schaumzellgröße und damit zu einer verringerten Isolationswirkung führen

Beach et al. (Polymer Degradation and Stability 135 (2017) 99-110) beschreiben bromierte Styrol-Butadien-Styrol-Triblockcopolymere, die als Flammschutzmittel verwendet werden.

EP 3070118 A1 beschreibt extrudierte Polystyrolschäume enthaltend ein bromiertes SBC-Blockcopolymer als Flammschutzmittel.

WO 2016/123263 offenbart bromierte und bromhydratisierte SBC-Blockcopolymere enthaltend Bromhydrineinheiten -CHBr-CHOH- als Flammschutzmittel für Blends z.B. mit Polystyrol und daraus hergestellte extrudierte Schäume. Bevorzugt sind Di- und Triblockcopolymere. Die Schäume weisen eine verbesserte Zellschaumgröße gegenüber bekannten bromierten SBCs auf. Die Herstellung erfolgt in mehreren Schritten. Nach dem ersten Schritt (Teilbromierung) erfolgt eine Isolierung des Polymeren, gefolgt von der Bromhydratisierung und mehrfachem Fällen des Produkts.

Das vorgenannte Herstellungsverfahren ist sehr aufwendig und unökonomisch, da es mindestens zwei Schritte benötigt.

Aufgabe der vorliegenden Erfindung ist es, bromierte SBC-Blockcopolymere bereitzustellen, die als flammhemmendes Additiv in Zusammensetzungen mit ungeschäumten oder geschäumten thermoplastischen Polymeren, insbesondere Vinylaromatmatrixhomo- oder copolymeren, und daraus hergestellten expandierten oder extrudierten Schäumen eine homogene oder zumindest verbesserte Mischbarkeit aufweisen. Ferner sollen die erhaltenen Schäume größere Schaumzellen aufweisen und einen guten Flammschutz des Materials gewährleisten.

Des Weiteren sollen sich die bromierten SBC-Blockcopolymere durch ein nicht zu aufwendiges technisches Verfahren herstellen lassen.

Ein Gegenstand der Erfindung sind bromierte Vinylaromat-Dien-Blockcopolymere (Br-SBC), enthaltend mindestens einen Vinylaromatpolymerblock S, insbesondere Polystyrolblock, und mindestens einen bromierten Dienpolymerblock BB,

dadurch gekennzeichnet, dass

- vor der Bromierung die gewichtsmittlere Molmasse $M_w$ (oder Länge), des Blocks S gleich oder größer als $M_w$ (oder Länge) des Blocks BB ist;
- die Molmasse $M_w$ des Blocks BB (vor der Bromierung) 50.000 bis 130.000 g/mol beträgt, und
- die Molmasse $M_w$ des Blocks S 60.000 bis 300.000 g/mol beträgt.

Die Bestimmung der Molmasse $M_w$ erfolgt mittels GPC gemäß ISO 16014-3:2012 (relativ zu Polystyrolstandards bei 25°C in THF) vor der Bromierung des erfindungsgemäßen Blockcopolymeren. Die korrekte Molmasse $M_w$ des Dienpolymers kann beispielsweise durch eine Mischeichung berechnet werden, wenn die Monomerzusammensetzung bekannt ist.

Im Fall von Styrol-Butadien-(Block)copolymeren stellt die Formel

$$M_W(GPC) = M_{W\,absolut}(\text{Polystyrol-Anteil}) + M_{W\,absolut}(\text{Polybutadien-Anteil}) \times 1,72$$

eine gute Näherung zur Berechnung der Molmasse dar, die bei der GPC-Messung im Fall einer Eichung mit Polystyrolstandards zu erwarten ist. Für andere Monomerkombinationen eignen sich GPC-Kopplungsmethoden wie GPC-Lichtstreukopplung, um die absolute Molmasse zu bestimmen. Alternativ kann mit einer universellen Kalibrierung gearbeitet werden. Mit Hilfe kommerzieller Software beispielsweise von der Polymer Standards Service, Mainz, können unter Verwendung der Mark-Houwink-Parameter passende GPC-Eichungen werden.

Die Br-SBC Blockcopolymere gemäß der Erfindung können linear oder sternförmig sein.

Bei sternförmigen Blockcopolymeren enthält vorzugsweise mindestens einer der Sternäste einen Vinylaromatpolymerblock S und einen bromierten Dienpolymerblock BB. Falls die sternförmigen Blockcopolymeren durch sequentielle anionische Polymerisation in nur einem Reaktor (Eintopfverfahren) hergestellt werden, enthält mindestens einer der Sternäste einen Vinylaromatpolymerblock S und einen bromierten Dienpolymerblock BB.

Ein weiterer Gegenstand der Erfindung ist ein Verfahren zur Herstellung der Br-SBC-Blockcopolymere gemäß der Erfindung.

Ein weiterer Gegenstand der Erfindung ist die Verwendung der Br-SBC-Blockcopolymere gemäß der Erfindung als Flammschutzmittel in Polymerzusammensetzungen enthaltend thermoplastische Polymere (Matrixpolymer), insbesondere Vinylaromathomo- oder copolymere, und daraus hergestellte expandierte oder extrudierte Schäume.

Ein weiterer Gegenstand der Erfindung sind Polymerzusammensetzungen enthaltend mindestens ein ungeschäumtes oder geschäumtes thermoplastisches Polymer, insbesondere Vinylaromathomo- oder copolymer, und mindestens ein Br-SBC-Blockcopolymer oder dessen Mischungen gemäß der Erfindung als Flammschutzmittel.

Ein weiterer Gegenstand der Erfindung sind expandierte oder extrudierte Schaumstoffe, insbesondere EPS oder XPS-Schaumstoffe, aus den Polymerzusammensetzungen gemäß der Erfindung.

Ebenfalls Gegenstand der Erfindung ist die Verwendung der erfindungsgemäßen Schaumstoffe, insbesondere EPS oder XPS, als Dämm- und/oder Isoliermaterial.

Bei der Verwendung der Br-SBC-Blockcopolymere gemäß der Erfindung als Flammschutzmittel in Polymerzusammensetzungen enthaltend mindestens ein Vinylaromathomo- oder copolymer als Matrixpolymer und daraus hergestellten expandierten oder extrudierten Schäumen ist es vorteilhaft, wenn die Molmasse $M_w$ (oder Länge) des S-Blocks des Br-SBC-Blockcopolymers 30 bis 70 % der gewichtsmittleren Molmasse $M_w$ des Vinylaromatmatrix(co)polymers, vorzugsweise Styrolhomo- oder copolymers wie GPPS oder SAN, beträgt.

Br-SBC-Blockcopolymer

Als vinylaromatische Monomere für den Block S können Styrol, alpha-Methylstyrol, p-Methylstyrol, Ethylstyrol, tert-Butylstyrol, Vinyltoluol oder Mischungen davon verwendet werden. Bevorzugt wird Styrol verwendet.

Als Diene für den Block BB werden bevorzugt Butadien, Isopren, 2,3-Dimethylbutadien, 1,3-Pentadien oder 1,3-Hexadien oder Mischungen davon verwendet. Besonders bevorzugt wird 1,3-Butadien verwendet.

Das erfindungsgemäße Br-SBC-Blockcopolymer enthält - vor der Bromierung- als Dien-Polymerblöcke vorzugsweise nur Dien-Homopolymerblöcke BB. Ein oder mehrere, statistische Weichblöcke B/S aus Dien/Vinylaromat-Copolymeren, mit einem Vinylaromatmonomeranteil von 1 bis zu 99 %, können auch vorhanden sein, sind aber nicht bevorzugt.

Vorzugsweise liegt der 1,2-Vinylgehalt des Br-SBC-Blockcopolymeren gemäß der Erfindung - vor der Bromierung - bei über 10%.

Als Vinylgehalt wird der relative Anteil an 1,2-Verknüpfungen der Dieneinheiten des Br-SBC-Blockcopolymers vor der Bromierung, bezogen auf die Summe der 1,2-, 1,4-cis und 1,4-trans-Verknüpfungen verstanden.

Ein hoher 1,2-Vinylgehalt des Br-SBC-Blockcopolymeren gemäß der Erfindung - vor der Bromierung - ist vorteilhaft.

Bevorzugt ist ein 1,2-Vinylgehalt des Br-SBC-Blockcopolymeren gemäß der Erfindung - vor der Bromierung - von mehr als 30%, besonders bevorzugt von mehr als 50%, ganz besonders bevorzugt von mehr als 60%.

Die Molmasse $M_w$ des Blocks BB (vor der Bromierung) des erfindungsgemäßen Br-SBC-Blockcopolymeren beträgt 50.000 bis 130.000 g/mol, bevorzugt 60.000 bis 120.000 g/mol.

Bei linearen erfindungsgemäßen Blockcopolymeren beträgt die Molmasse $M_w$ des Blocks BB vorzugsweise 70.000 bis 130.000 g/mol, besonders bevorzugt 80.000 bis 120.000 g/mol.

Bei sternförmigen erfindungsgemäßen Blockcopolymeren beträgt die Molmasse $M_w$ des Blocks BB vorzugsweise 50.000 bis 90.000 g/mol, besonders bevorzugt 60.000 bis 80.000 g/mol.

Die Molmasse $M_w$ des Blocks S des erfindungsgemäßen Br-SBC-Blockcopolymeren beträgt 60.000 bis 300.000 g/mol, bevorzugt 70.000 bis 200.000 g/mol, besonders bevorzugt 80.000 bis 130.000 g/mol.

Der Anteil des Dien-Polymers, insbesondere des Polybutadiens, beträgt - vor der Bromierung - oftmals weniger als 60 Gew.-%, bezogen auf das Br-SBC-Blockcopolymer.

Bevorzugte Br-SBC-Blockcopolymere gemäß der Erfindung sind lineare Br-SBC-Blockcopolymere der allgemeinen Struktur

$$K\text{-}S\text{-}BB\text{-}A \qquad (Ia),$$

worin K und A, jeweils unabhängig voneinander, nicht vorhanden oder ein von S und BB verschiedener Polymerblock sind; S und BB wie zuvor beschrieben sind; und die Molmasse $M_w$ (oder Blocklänge) der Blöcke K und A jeweils kleiner als $M_w$ des Blocks BB ist.

Unter "verschiedener Polymerblock" kann auch ein Vinylaromatpolymerblock verstanden werden, der sich von dem Block S nur in der Molmasse $M_w$ - wie zuvor definiert - unterscheidet. Die Blöcke K und A, falls vorhanden, weisen - unabhängig voneinander - vorzugsweise eine Molmasse $M_w$ im Bereich von 15.000 bis 35.000 g/mol, insbesondere 20.000 bis 30.000 g/mol, auf.

Als Monomere für den Block A geeignet sind solche, die mit den für die Blöcke S, BB und, falls vorhanden, K verwendeten Monomeren verträglich sind. Bevorzugt ist der Block A ein Vinylaromat(co)polymerblock, insbesondere ein Styrol(co)polymerblock. Besonders bevorzugt ist der Block A ein Vinylaromathomopolymerblock, insbesondere ein Polystyrolblock. Oftmals ist der Block A ein, vorzugsweise statistischer, Vinylaromat/Dien-Copolymerblock, insbesondere ein, vorzugsweise statistischer, Styrol/Butadien-Copolymerblock.

Als vinylaromatische Monomere können für den Block A die oben für den Block S genannten Monomeren verwendet werden. Bevorzugt wird Styrol verwendet.

Als Monomere für den Block K geeignet sind solche, die mit den für die Blöcke S, BB und, falls vorhanden, A verwendeten Monomeren verträglich sind. Bevorzugt ist der Block K so aufgebaut wie zuvor für den Block A beschrieben.

Bevorzugt sind Diblockcopolymere der Struktur (Ia), worin K und A nicht vorhanden sind.

Besonders bevorzugt sind unsymmetrische Br-SBC-Triblockcopolymere der Struktur (Ia), worin K nicht vorhanden ist und A ein Vinylaromatpolymerblock, insbesondere Polystyrolblock, ist. Die gewichtsmittlere Molmasse $M_w$ erfindungsgemäßer linearer Br-SBC-Blockcopolymere, insbesondere von unsymmetrischen Br-SBC-Triblockcopolymeren, beträgt vorzugsweise 150.000 bis 500.000 g/mol, besonders bevorzugt 150.000 bis 400.000 g/mol, ganz besonders bevorzugt 150.000 bis 300.000 g/mol.

Weiterhin bevorzugte Br-SBC-Blockcopolymere gemäß der Erfindung sind sternförmige Br-SBC-Blockcopolymere der allgemeinen Struktur

$$Z\text{-}[(P)_p(Q)_q(R)_r\cdots]_m \qquad (Ib),$$

insbesondere

$$Z\text{-}[(P)_p(Q)_q(R)_r]_m \qquad (Ib\text{-}1),$$

worin Z = Rest eines polyfunktionellen Kopplungsmittels oder Initiators; P, Q, R verschiedene Sternäste sind, wobei mindestens einer der Sternäste P, Q oder R, einen Vinylaromatpolymerblock S und einen bromierten Dienpolymerblock BB enthält; p, q, r = natürliche Zahlen $\geq$ 0; und m = Summe der Sternäste bzw. der Indizes p, q, r... (insbesondere Summe der Indizes p, q und r), wobei m eine natürliche Zahl von 2 bis 10, vorzugsweise 3 bis 5, insbesondere 3 oder 4 ist.

Die sternförmigen Br-SBC-Blockcopolymere gemäß der Erfindung sind oftmals und bevorzugt unsymmetrisch.

In Struktur (Ib) weist üblicherweise Sternast P einen Vinylaromatpolymerblock S und einen bromierten Dien-polymerblock BB auf (p $\geq$ 1). Der Block S ist im Allgemeinen außenstehend. Die sternförmigen Br-SBC-Blockcopolymere gemäß der Erfindung besitzen mindestens einen, vorzugsweise ein oder zwei (p = 1 oder 2), insbesondere einen Sternast P.

Bevorzugte Sternäste P haben die Struktur -BB-S oder $\sim$A-BB-S, worin $\sim$ die Bindungsstelle an den Rest Z bedeutet, A ein von S und BB verschiedener Polymerblock wie oben zuvor beschrieben ist, und BB und S wie oben zuvor beschrieben sind.

In Struktur (Ib) können die Sternäste Q und R unabhängig voneinander die Struktur $\sim$A-BB, $\sim$S, $\sim$BB, $\sim$BB-A aufweisen.

Bevorzugt sind sternförmige Blockcopolymere der Formel (Ib-1), worin P = $\sim$BB-S, Q = $\sim$BB-A, r = 0, und BB, S und A wie oben definiert sind.

Weiterhin bevorzugt sind sternförmige Blockcopolymere der Formel (Ib-1), worin P = $\sim$BB-S, Q = $\sim$S und R = $\sim$BB und vorzugsweise m = 3 bis10, insbesondere 3 bis 5 ist.

Weiterhin bevorzugt sind sternförmige Blockcopolymere der Formel (Ib-1), worin P = $\sim$BB-S, Q = $\sim$A und R = $\sim$BB und vorzugsweise m = 3 bis 10, insbesondere 3 bis 5, ist.

Besonders bevorzugt sind sternförmige Blockcopolymere der Formel (Ib-1), worin P = $\sim$BB-S, Q = $\sim$BB-A, r = 0 und m = 3 bis 10, insbesondere 3 bis 5, ist, und BB, S und A wie oben definiert sind.

Ganz besonders bevorzugt sind unsymmetrische sternförmige Blockcopolymere der Formel (Ib-1), worin P = $\sim$BB-S, Q = $\sim$BB-A, r = 0, p= 1, q = 3 ist, und BB, S und A wie oben definiert sind.

Die gewichtsmittlere Molmasse $M_W$ erfindungsgemäßer sternförmiger Br-SBC-Blockcopolymere, insbesondere solcher der Struktur (Ib) mit m = 3 bis 5, beträgt oftmals 150.000 bis 600.000 g/mol, vorzugsweise 180.000 bis 300.000 g/mol.

Weiterhin bevorzugt sind Mischungen enthaltend (oder bestehend aus):

$\alpha$) mindestens ein, vorzugsweise ein lineares Br-SBC-Blockcopolymer gemäß der Erfindung, und

$\beta$) mindestens ein, bevorzugt ein weiteres - von $\alpha$) verschiedenes - bromiertes Dien/Vinylaromat-Copolymer, insbesondere Br-SBC-Blockcopolymer,

enthaltend mindestens einen bromierten Dienpolymerblock BB, mindestens einen Vinylaromatpolymerblock A und keinen Vinylaromatpolymerblock S, wobei A, S und BB wie oben beschrieben sind, und die Molmasse $M_W$(oder Blocklänge) des Blocks A jeweils kleiner als $M_W$ des Blocks BB ist.

Die vorstehend für $\beta$) genannten Blöcke S und BB haben dabei die für das erfindungsgemäße Br-SBC-Blockcopolymer angegebene Bedeutung.

Vorzugsweise ist das bromierte Dien/Vinylaromat-Copolymer $\beta$) ein lineares Br-SBC-Blockcopolymer, insbesondere ein lineares Br-SBC-Blockcopolymer der Struktur H-BB-A (Ic), worin H ein Vinylaromatpolymerblock ist, und die Molmasse $M_W$ (oder Blocklänge) des Blocks H kleiner als $M_W$ des Blocks BB ist, und A und BB wie oben beschrieben sind.

In Struktur (Ic) können die Molmassen Mw und die Zusammensetzung der Blöcke A und H gleich oder verschieden sein; bevorzugt sind die Blöcke A und H gleich.

Bevorzugt sind vorgenannte Mischungen enthaltend $\alpha$) ein lineares Br-SBC-Blockcopolymer der Struktur (Ia), vorzugsweise unsymmetrische Br-SBC-Triblockcopolymere der Struktur (Ia), worin K nicht vorhanden ist und A ein Vinylaromatpolymerblock, insbesondere Polystyrolblock, ist; und $\beta$) ein lineares, Br-SBC-Blockcopolymer der Struktur H-BB-A (Ic) ist.

Weiterhin bevorzugt sind Mischungen enthaltend (oder bestehend aus):

$\alpha$) mindestens ein, vorzugsweise ein, lineares Br-SBC-Blockcopolymer gemäß der Erfindung;

$\beta$) mindestens ein, bevorzugt ein, weiteres - von $\alpha$) verschiedenes - bromiertes Dien/Vinylaromat-Copolymer, insbesondere Br-SBC-Blockcopolymer, wie zuvor beschrieben; und

$\gamma$) mindestens ein, bevorzugt ein, bromiertes Polybutadien-Homopolymer (Br-PBD), dessen gewichtsmittlere Molmasse Mw (oder Länge) - vor der Bromierung - gleich oder kleiner als Mw (oder Länge) des Blocks BB ist.

Das Molverhältnis von $\alpha$) zu $\beta$) oder von $\alpha$) zu Summe aus $\beta$) und $\gamma$) ist im Allgemeinen 1 : 0,01 bis 10; bevorzugt 1 : 0,1 bis 1 : 5; besonders bevorzugt 1 : 0,5 bis 1 : 3; ganz besonders bevorzugt 1:1 bis 1:2.

Herstellung des Br-SBC-Blockcopolymers

Die unbromierte Vorstufe der erfindungsgemäßen Br-SBC-Blockcopolymere kann beispielsweise durch sequentielle anionische Polymerisation gebildet werden.

Als anionischer Polymerisationsinitiator können die üblichen mono-, bi-oder multifunktionellen Alkalimetallalkyle, -aryle oder-aralkyle verwendet werden. Zweckmäßigerweise werden lithiumorganische Verbindungen eingesetzt wie Ethyl-, Propyl-, Isopropyl-, n-Butyl-, sek-Butyl-, tert-Butyl-, Phenyl-, Diphenylhexyl-, Hexamethyldi-, Butadienyl-, Isoprenyl-, Polystyryllithium, 1,4-Dilithiobutan, 1,4-Dilithio-2-buten oder 1,4-Dilithiobenzol. Die benötigte Menge an Polymerisationsinitiator richtet sich nach dem gewünschten Molekulargewicht.

In der Regel liegt sie im Bereich von 0,001 bis 5 mol-%, bezogen auf die Gesamtmonomermenge.

Die Herstellung der unbromierten Vorstufe der erfindungsgemäßen Br-SBC-Blockcopolymeren kann in einem oder in mehreren Reaktoren erfolgen; bevorzugt ist die Herstellung in einem Reaktor.

Die anionische Polymerisation wird mehrstufig durchgeführt und bei monofunktioneller Initiierung z.B. mit der Herstellung des Blocks S begonnen. Ein Teil der Monomeren wird im Reaktor vorgelegt und die Polymerisation durch Zugabe des Initiators gestartet. Um einen definierten, aus der Monomer- und Initiatordosierung berechenbaren Kettenaufbau zu erzielen, ist es empfehlenswert, den Prozess bis zu einem hohen Umsatz (über 99%) zu führen, bevor die zweite Monomerzugabe erfolgt. Zwingend erforderlich ist dies jedoch nicht.

Die Abfolge der Monomerzugabe richtet sich nach dem gewählten Blockaufbau. Bei monofunktioneller Initiierung wird z.B. zuerst die vinylaromatische Verbindung entweder vorgelegt oder direkt zudosiert und polymerisiert. Danach wird z.B. das Dien zugegeben und polymerisiert. Anschließend kann z.B. ein weiterer Polymerblock A durch Zugabe eines weiteren Monomers anpolymerisiert werden. Stattdessen können benötigte Polymerblöcke auch durch eine Kopplungsreaktion miteinander verbunden werden. Im Falle der bifunktionellen Initiierung wird zum Beispiel zuerst der Dien-Block (= Block BB vor Bromierung) aufgebaut, gefolgt vom S-Block.

Unsymmetrische Sternblockcopolymere sind beispielsweise durch getrennte Herstellung der einzelnen Sternäste bzw. durch mehrfache Initiierung, beispielsweise zweifache Initiierung mit Aufteilung des Initiators im Verhältnis 2/1 bis 10/1, zugänglich.

Bei der Herstellung in mehreren Reaktoren werden die verschiedenen Polymerketten (z.B. Sternäste) in verschiedenen Reaktoren durch sequentielle anionische Polymerisation hergestellt. Dabei wird üblicherweise in jeden Reaktor einmal ein Polymerisationsinitiator zugegeben, dann werden die Monomeren nacheinander zugeführt und jeweils bis zum vollständigen Umsatz auspolymerisiert. Danach werden die erhaltenen "lebenden" Polymerketten aus den verschiedenen Reaktoren in einen Reaktor zusammengeführt, und gegebenenfalls bei weiterer Zugabe von Initiator und weiterer Zugabe von Monomer weiter polymerisiert.

Bevorzugt ist die Herstellung der unbromierten Vorstufe der erfindungsgemäßen Br-SBC-Blockcopolymeren in einem Reaktor. Zur Herstellung von unsymmetrischen sternförmigen Br-SBC-Blockcopolymeren in einem Reaktor wird dabei mindestens zweimal ein Polymerisationsinitiator zugegeben.

Bei der Herstellung von zum Beispiel unsymmetrischen sternförmigen Blockcopolymeren der Formel (Ib-1), worin P = ~BB-S, Q = ~BB-A, r = 0, p= 1, q = 3 ist, und BB, S und A wie oben definiert sind, wird gleichzeitig das vinylaromatische Monomer S1 (erster Teil von Block S) und der Initiator Ini1 im Reaktor zugegeben und vollständig polymerisiert und anschließend nochmals gleichzeitig das vinylaromatische Monomer S2 (zweiter Teil von Block S bzw. = Block A) und Initiator Ini 2. Auf diese Weise erhält man nebeneinander zwei "lebende" Polymerketten S1-S2-Ini1 bzw. S-Ini1 und S2-Ini2 bzw. A-Ini2, anschließend wird das Dien zugeführt und vollständig polymerisiert (= Block BB vor Bromierung).

Das Verhältnis von Initiator Ini1 zu Initiator Ini2 bestimmt den relativen Anteil der jeweiligen Sternäste, die sich nach der Kopplung statistisch verteilt in den einzelnen sternförmigen Blockcopolymeren finden. Der Block S wird hierbei aus den Dosierungen der vinylaromatischen Monomeren S1 und S2 gebildet, der Block A alleine durch die Dosierung S2. Das molare Initiatorverhältnis Ini2/Ini1 liegt bevorzugt im Bereich von 4/1 bis 1/1, besonders bevorzugt im Bereich von 3,5/1 bis 1,5/1.

Die sequentielle anionische Polymerisation kann in Gegenwart eines Lösungsmittels vorgenommen werden. Als Lösungsmittel eignen sich die für anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, Iso-Octan, Benzol, Alkylbenzole, wie Toluol, Xylol, Ethylbenzol oder Dekalin oder geeignete Gemische. Bevorzugt werden Cyclohexan und Methylcyclohexan verwendet.

Um einen relativ hohen 1,2-Verknüpfungsanteil bzw. Vinylgehalt der Dienblöcke bzw. des diese enthaltenden Blockcopolymers zu erzielen, setzt man vorzugsweise auch noch ein Donorlösungsmittel wie Dioxan oder Tetrahydrofuran (THF), oder chelatisierende Amine wie Tetramethylethylendiamin oder methylierte Oligoamine wie Pentamethyldiethylentriamin, oder Kronenether wie 12-Krone-4, 15-Krone-5, 18-Krone-6, oder Kryptanden zu. Bei Verwendung von THF sind Mengen von über 0,25 Vol.-%, bezogen auf das Lösungsmittel, bevorzugt. Besonders bevorzugt sind 1 bis 10 Vol.-% THF, bezogen auf das Lösungsmittel. In Falle von chelatisierenden Aminen genügen 1 bis 2 mol Amin, bezogen auf Lithium, und im Fall von Kronenethern oder Kryptanden 1 mol pro mol Lithium.

Nach Beendigung der Polymerisation können die lebenden Polymerketten mit einem Kettenabbruchmittel verschlossen werden. Als Kettenabbruchmittel eignen sich protonaktive Substanzen oder Lewis-Säuren, wie beispielsweise Wasser, Alkohole, aliphatische oder aromatische Carbonsäuren sowie anorganische Säuren wie Kohlensäure oder Borsäure.

Anstelle der Zugabe eines Kettenabbruchmittels nach Beendigung der Polymerisation können die lebenden Polymerketten auch durch mehrfunktionelle Kopplungsmittel, wie polyfunktionelle Aldehyde, Ketone, Ester, Anhydride oder Epoxide sternförmig verknüpft werden. Hierbei können durch Kopplung gleicher oder verschiedener Blöcke symmetrische und unsymmetrische Sternblockcopolymere erhalten werden, deren Arme die oben genannten Blockstrukturen aufweisen können.

Weiterer Gegenstand der Erfindung ist ein Verfahren zur Herstellung der Br-SBC-Blockcopolymeren gemäß der Erfindung, umfassend Schritte a) bis d):

a) Herstellung mindestens eines linearen oder sternförmigen Vinylaromat-Dien-Blockcopolymers (SBC), enthaltend mindestens einen Vinylaromatpolymerblock S, insbesondere Polystyrolblock, und mindestens einen Dienpolymerblock B (= unbromierte Vorstufe des Blocks BB), durch sequentielle anionische Polymerisation, wobei die gewichtsmittlere Molmasse $M_w$ des Blocks S gleich oder größer als $M_w$ des Blocks BB ist;

b) Bereitstellen einer homogenen Reaktionslösung enthaltend das in Schritt a) erhaltene SBC, mindestens ein Bromierungsmittel und mindestens ein Lösungsmittel;

c) Bromierung von mehr als 50 % der nicht-aromatischen Doppelbindungen des SBC-Copolymers, bezogen auf den nicht-aromatischen Doppelbindungsgehalt des SBC-Copolymers vor der Bromierung; und

d) Isolation des in Schritt c) erhaltenen Br-SBC-Copolymers.

Schritt c) erfolgt üblicherweise unter Reaktionsbedingungen, insbesondere in einem Zeitrahmen, die bzw. der ausreichend sind bzw. ist, um eine Bromierung von mehr als 50% der in dem SBC-Copolymer enthaltenen nicht-aromatischen Doppelbindungen, bezogen auf den nicht-aromatischen Doppelbindungsgehalt des SBC-Copolymers vor der Bromierung, zu erzielen. Der Gehalt der nicht-aromatischen Doppelbindungen wird durch $^1$H-NMR-Spektroskopie bestimmt.

Die Isolation des bromierten SBC-Blockcopolymers (= Br-SBC) erfolgt durch übliche Techniken.

Nach dem Erreichen eines gewünschten Bromierungsgrades, insbesondere bei Verwendung eines Tribromids wie Tetraalkylammoniumtribromid oder Pyridiniumtribromid (PTB) als Bromierungsmittel, können durch Waschen, Dekantieren oder Filtrieren Nebenprodukte wie Tetraalkylammoniummonobromid oder Pyridiniumhydrobromid (PHB) aus der Reaktionslösung entfernt und rückgewonnen werden. Die Entfernung von weiteren Nebenprodukten, insbesondere Bromidsalzen, kann durch Durchleiten des Filtrats durch ein Kieselgel oder durch ein Ionenaustauscherharzbett erreicht werden. Bevorzugt wird das Filtrat, das aus dem Ionenaustauscherharzbett austritt, mit einer Menge an wässriger Natriumhydrogensulfitlösung gewaschen, die ausreicht, um nicht umgesetztes Bromierungsmittel (z. B. PTB), das im Filtrat vorhanden sein kann. zu neutralisieren oder zu quenchen. Durch dieses Vorgehen wird jegliche orange Farbe (möglicherweise aufgrund des Vorhandenseins von nicht umgesetztem PTB), die in dem Filtrat vorhanden sein kann, bevor mit wässriger Natriumhydrogensulfitlösung gewaschen wird, beseitigt oder eliminiert.

Das bromierte Polymer (Br-SBC) gemäß der Erfindung wird im Allgemeinen durch Ausfällung in einem Medium, wie Methanol, gewonnen, worin das bromierte Polymer im Wesentlichen unlöslich und vorzugsweise vollständig unlöslich ist.

Das Bromierungsmittel umfasst vorzugsweise ein Tribromid, ausgewählt aus Pyridiniumtribromid, Phenyltrimethylammoniumtribromid und einem Tetraalkylammoniumtribromid, wie Tetrabutylammoniumtribromid, bevorzugt Pyridiniumtribromid und besonders bevorzugt Tetraalkylammoniumtribromid. Das Bromierungsmittel enthält gegebenenfalls ein Lösungsmittel. Beispielsweise sind chlorierte Lösungsmittel wie Methylenchlorid geeignet als Lösungsmittel für Tetraalkylammoniumtribromide und Tetrahydrofuran (THF) ist zum Beispiel ein geeignetes Lösungsmittel für PTB.

Ein alternatives bevorzugtes Bromierungsmittel umfasst eine Kombination von elementarem Brom und einem Lösungsmittel oder Lösungsmittelgemisch und kann gegebenenfalls eine monobromierte Spezies, beispielsweise Tetraalkylammoniummonobromid, enthalten. Ein besonders bevorzugtes alternatives Bromierungsmittel ist eine Kombination von elementarem Brom und einer Mischung aus einem chlorierten Kohlenwasserstoff, vorzugsweise Tetrachlorkohlenstoff und einem Alkohol. Der Alkohol ist vorzugsweise ausgewählt aus ein- oder mehrwertigen Alkoholen mit 1 bis 12 Kohlenstoffatomen ($C_{1-12}$), besonders bevorzugt einwertigen Alkoholen mit 1 bis 8 Kohlenstoffatomen ($C_{1-8}$), ganz besonders bevorzugt einwertigen Alkoholen mit 1 bis 4 Kohlenstoffatomen ($C_{1-4}$) wie Methanol, Ethanol, n- und Isopropanol und n-, sec-, iso- und tert-Butanol.

Die Herstellung der bromierten Butadien-Copolymeren der vorliegenden Erfindung erfolgt vorzugsweise durch selektive Bromierung, besonders bevorzugt durch Bromierung, die selektiv und mild statt aggressiv ist. Die Bromierung erfolgt vorzugsweise ionisch, besonders bevorzugt kationisch, anstatt über einen Radikalmechanismus. Ganz besonders bevorzugt verläuft die Bromierung von Butadien-Copolymeren im Wesentlichen ohne, vorzugsweise ganz ohne freie Radikal-Substitutionsreaktionen. Ionische Bromierung ist gegenüber der radikalischen Bromierung bevorzugt, da man annimmt, dass durch Letzteres tertiäre Bromprodukte gebildet werden, die wiederum zu einer schlechteren thermischen Stabilität beitragen könnten. Darüber hinaus wird angenommen, dass durch eine freie radikalische Bromierung auch benzylische Gruppen innerhalb der vinylaromatischen Einheiten zusätzlich zu den ungesättigten Bindungen in den Dien-Einheiten des SBC-Blockcopolymers bromiert werden. Ionische Bromierungsprodukte weisen thermische Stabilitätswerte auf, die mit denen von HBCD vergleichbar sind.

Bromierte Copolymere der vorliegenden Erfindung weisen vorzugsweise einen tertiären Bromgehalt auf, der niedrig genug ist, um keine nachteiligen Wirkungen auf die thermische Stabilität der bromierten Blockcopolymere zu haben.

Die Bromierung von tertiären Kohlenstoffatomen oder die nicht vollständige Bromierung der vorhandenen Doppelbindungen führt zu einer erniedrigten thermischen Stabilität im Vergleich zu der stöchiometrisch bromierten Verbindung ohne bromierte tertiäre Kohlenstoffatome. Je nach Verwendungszweck des bromierten Copolymers ist die ausreichende thermische Stabilität sicherzustellen.

"Mild", wie hierin in Bezug auf Bromierungsreaktionen verwendet, bezieht sich auf Reaktionen, die ein selektives Bromierungsmittel, vorzugsweise ein Tribromid, wie ein Tetraalkylammoniumtribromid oder Pyridiniumtribromid, verwenden und vorzugsweise die Bildung von tertiären Bromeinheiten, wie z.B. tertiäre Bromide minimieren, besonders bevorzugt eliminieren.

"Aggressiv", wie hierin in Bezug auf Bromierungsreaktionen verwendet, bedeutet, dass die Reaktionsbedingungen zur Bildung von tertiären Bromiden führen. Die Verwendung von elementarem oder molekularem Brom als Bromierungsmittel bedingt oftmals die Bildung von tertiären Bromiden.

Die selektive Halogenierung von Dienen im Allgemeinen, die selektive Bromierung und die milde, selektive Bromierung von Dienen, insbesondere Polybutadienen, ist bekannt und in der Literatur beschrieben (s. WO 2007/058736 A, Seite 7, Zeile 4 bis Seite 8, Zeile 4).

Bevorzugte erfindungsgemäße Br-SBC-Blockcopolymere sind vollständig bromiert oder fast vollständig bromiert. "Vollständig bromiert" bedeutet, dass Doppelbindungen oder ungesättigte Einheiten, die vor der Bromierung in der Dieneinheit vorliegen, vollständig bromiert sind. Teilweise bromierte Br-SBC-Blockcopolymere können jedoch thermisch stabiler sein als die entsprechenden vollständig bromierten Br-SBC-Blockcopolymere.

Eine erhöhte Anzahl nicht umgesetzter Doppelbindungen im Blockcopolymer könnte zu Quervernetzungen führen, die wegen unlöslicher Gelbildung in den resultierenden Produkten unerwünscht sind. Die Gele können die physikalischen Eigenschaften, die Oberfläche oder die optischen Eigenschaften beeinträchtigen oder zu einer erhöhten Farbbildung führen. Wenn Blends mit Vinylaromat(co)polymeren zu Schaumstrukturen umgewandelt werden, neigen die vernetzten Reste dazu, die Schaumbildung nachteilig zu beeinflussen, was zu ungleichförmigen Schaumstrukturen führt.

Ein weiterer Gegenstand der Erfindung ist die Verwendung der Br-SBC-Blockcopolymere gemäß der Erfindung als Flammschutzmittel.

Die erfindungsgemäßen Flammschutzmittel bzw. Br-SBC-Blockcopolymere werden erfindungsgemäß für die Herstellung ungeschäumter oder geschäumter thermoplastischer Polymere, insbesondere Vinylaromathomo- oder copolymere, verwendet. Hierfür wird das Flammschutzmittel vorzugsweise physikalisch mit dem entsprechenden Polymer in der Schmelze vermischt und dann als Polymermischung zunächst fertig konfektioniert und dann in einem zweiten Verfahrensschritt zusammen mit demselben oder mit einem anderen Polymer weiterverarbeitet. Das Flammschutzmittel kann der Polymerschmelze aber auch zu einem späteren Zeitpunkt zugefügt werden.

Alternativ ist im Falle von Vinylaromathomo- oder copolymeren auch der Zusatz der erfindungsgemäßen Verbindungen (I) vor, während und/oder nach der Herstellung durch Suspensionspolymerisation bevorzugt.

Gegenstand der Erfindung sind auch Polymerzusammensetzungen enthaltend mindestens ein ungeschäumtes oder geschäumtes thermoplastisches Polymer, insbesondere Vinylaromathomo- oder copolymer, und mindestens ein Br-SBC-Blockcopolymer oder dessen Mischungen gemäß der Erfindung als Flammschutzmittel.

Das erfindungsgemäße Br-SBC-Blockcopolymer ist in der erfindungsgemäßen Polymerzusammensetzung in einer Menge enthalten, die einen ausreichenden Flammschutz gewährleistet. Unter einer ausreichenden Menge ist die Menge zu verstehen, die ausreichend ist, um eine Formmasse oder ein geschäumtes oder nicht geschäumtes Formteil aus der erfindungsgemäßen Polymerzusammensetzung bereitzustellen, so dass deren Bromgehalt 0,1 bis 5 Gew.-%, bezogen auf die Polymerzusammensetzung, beträgt. Ein Bromgehalt unter 0,1 Prozent liefert keine akzeptable Flammschutzleistung. Produkte mit Bromgehalten oberhalb von 5 Gew.-% können zwar hergestellt werden, jedoch sind solche Produkte wirtschaftlich unattraktiv und der hohe Bromgehalt könnte zudem einen nachteiligen Einfluss auf die physikalischen Eigenschaften des Produkts haben. Oftmals werden 0,3 bis 10 Gew.-%, vorzugsweise von 0,5 bis 5 Gew.-% des erfindungsgemäßen Br-SBC-Blockcopolymers, bezogen auf das thermoplastische Polymer (= Matrixpolymer) eingesetzt.

Als thermoplastisches Polymer können beispielsweise geschäumte oder ungeschäumte Vinylaromathomo- oder copolymere wie Styrolpolymere, einschließlich ABS, ASA, SAN, AMSAN, Polyester, Polyimide, Polysulfone, Polyolefine wie Polyethylen und Polypropylen, Polyacrylate, Polyetheretherketone, Polyurethane, Polycarbonate, Polyphenylenoxide, ungesättigte Polyesterharze, Phenolharze, Polyamide, Polyethersulfone, Polyetherketone und Polyethersulfide, jeweils einzeln oder in Mischung als Polymerzusammensetzungens eingesetzt werden. Erfindungsgemäß umfasst der Begriff "Vinylaromathomo- oder copolymer" Styrolpolymere wie substituierte (z. B. Poly(alpha-methylstyrol)), ringsubstituierte (z.B. halogenierte Styrole wie 2- oder 4-Bromstyrol, alkoxylierte Styrole wie 2- oder 4-Methoxystyrol, nitrierte Styrole (z.B. 2-Nitrostyrol oder 4-Nitrostyrol) und alkylierte Styrole wie 2- oder 4-Methylstyrol oder 2,4-Dimethylstyrol)) und unsubstituierte Spezies (z.B. Polystyrol-Homopolymer) sowie Copolymere (z.B. Styrol/Acrylnitril-Copolymere).

Bevorzugt werden als Vinylaromathomo- oder copolymere Styrolpolymere wie glasklares Polystyrol (GPPS), Schlagzähpolystyrol (HIPS), anionisch polymerisiertes Polystyrol oder Schlagzähpolystyrol (A-IPS), Styrol-alpha-Methylstyrol-copolymere, Acrylnitril-Butadien-Styrolpolymerisate (ABS), Styrol-Acrylnitril-Copolymere (SAN), Acrylnitril-alpha-Methylstyrol-Copolymere (AMSAN), Acrylnitril-Styrol-Acrylester (ASA), Methacrylat-Butadien-Styrol (MBS), Methylmethacrylat-Acrylnitril-Butadien-Styrol (MABS)-polymerisate oder Mischungen davon oder mit Polyphenylenether (PPE) eingesetzt.

Erfindungsgemäß umfasst der Begriff "Styrolpolymer" Polymere auf Basis von Styrol, alpha-Methylstyrol oder Mischungen von Styrol und alpha-Methylstyrol; analog gilt dies für den Styrolanteil in SAN, AMSAN, ABS, ASA, MBS und MABS. Erfindungsgemäße Styrolpolymere basieren auf mindestens 50 Gew.-% Styrol und/oder alpha-Methylstyrol-Monomeren.

Bevorzugt sind erfindungsgemäße Polymerzusammensetzungen enthaltend geschäumte oder ungeschäumte Vinylaromathomo- oder copolymere, insbesondere Styrolhomo- oder copolymere jeweils einzeln oder in Mischung als Polymerblend.

Die Vinylaromathomo- oder copolymere werden in bekannter Weise durch Masse-, Lösungs-, Suspensions-, Fällungs- oder Emulsionspolymerisation erhalten, wobei Masse- und Lösungspolymerisation bevorzugt sind. Einzelheiten dieser Verfahren sind z. B. im Kunststoffhandbuch, Hrg. R. Vieweg und G. Daumiller, Bd. 4 "Polystyrol", Carl-Hanser-Verlag München 1996, S. 104 ff sowie in "Modern Styrenic Polymers: Polystyrenes and Styrenic Copolymers" (Eds., J. Scheirs, D. Priddy, Wiley, Chichester, UK, (2003), Seiten 27 bis 29) und in GB-A 1472195 beschrieben.

Die genannten Styrolpolymere können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.-Teilen, bevorzugt im Bereich von 1 bis 10 Gew.-Teilen, bezogen auf die gesamte Polymerschmelze, abgemischt werden. Des Weiteren sind Mischungen in den genannten Mengenbereichen auch mit zum Beispiel hydrophob modifizierten oder funktionalisierten Polymeren oder Oligomeren, Kautschuken, wie Polyacrylaten oder Polydienen, zum Beispiel Styrol-Butadien-Blockcopolymeren oder biologisch abbaubaren aliphatischen oder aliphatisch/aromatischen Copolyestern möglich.

Als Verträglichkeitsvermittler eignen sich zum Beispiel Maleinsäureanhydrid-modifizierte Styrolcopolymere, epoxidgruppenhaltige Polymere oder Organosilane.

Der Styrolpolymerschmelze können auch Polymerrecyklate der genannten thermoplastischen Polymeren, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-Teilen, insbesondere in Mengen von 1 bis 20 Gew.-Teilen.

Bevorzugt weisen die in den erfindungsgemäßen Polymerzusammensetzungen als Matrixpolymer enthaltenen thermoplastischen Polymere, insbesondere Vinylaromathomo- oder copolymere bzw. Styrolpolymere, eine gewichtsmittlere Molmasse $M_w$ im Bereich von 120.000 bis 400.000 g/mol, besonders bevorzugt im Bereich von 150.000 bis 250.000 g/mol, auf.

Im Falle von Vinylaromathomo- oder copolymeren bzw. Styrolpolymeren als Matrixpolymer ist es vorteilhaft, wenn die Molmasse $M_w$ (oder Länge) des S-Blocks des erfindungsgemäßen Br-SBC-Blockcopolymers 30 bis 70 % der gewichtsmittleren Molmasse $M_w$ des Vinylaromatmatrix(co)polymers, vorzugsweise Styrolhomo- oder copolymers wie GPPS oder SAN, beträgt.

Derartige geschäumte und ungeschäumte Polymerzusammensetzungen ermöglichen eine sehr feine Dispergierung des erfindungsgemäßen Flammschutzmittels in dem Matrixpolymer, so dass die Schaumbildung nicht gestört wird.

Die erfindungsgemäße Polymerzusammensetzung kann darüber hinaus weitere Additive enthalten, vorzugsweise solche, ausgewählt aus der Gruppe bestehend aus: weiteren (von den Br-SBC-Blockcopolymeren gemäß der Erfindung verschiedenen) flammhemmenden Additiven, thermischen Stabilisatoren, UV-Lichtstabilisatoren, Antioxidationsmitteln, Keimbildnern, Schäumungsmitteln (u.a. Treibmitteln), Säurefängern, athermanen Substanzen, Füllstoffen, Weichmachern, löslichen und unlöslichen anorganischen und/oder organischen Farbstoffen und Pigmenten.

Bevorzugt werden athermane Substanzen wie insbesondere Graphit zugesetzt, in Mengen von vorzugsweise 0,01 bis 7 Gew.-%, bezogen auf die Polymerzusammensetzung.

Die vorgenannten Additive können in einer Menge von insgesamt 0,01 bis 20 Gew.-%, vorzugsweise 0,05 bis 15 Gew.-%, bezogen auf die erfindungsgemäße Polymerzusammensetzung, eingesetzt werden.

Ein weiterer Gegenstand der Erfindung sind expandierte oder extrudierte Schäume, erhalten aus den Polymerzusammensetzungen gemäß der Erfindung.

Bevorzugt sind flammgeschützte Polymerschaumstoffe, insbesondere auf Basis von Styrolpolymeren, vorzugsweise EPS und XPS.

Die flammgeschützten Polymerschaumstoffe weisen bevorzugt eine Dichte im Bereich von 5 bis 200 $kg/m^3$, besonders bevorzugt im Bereich von 10 bis 50 $kg/m^3$, auf und sind bevorzugt zu mehr als 80 %, besonders bevorzugt zu 90 bis 100 % geschlossenzellig.

Die erfindungsgemäßen flammgeschützten, expandierbaren Styrolpolymere (EPS) und Styrolpolymerextrusionsschaumstoffe (XPS) können durch Zugabe eines Treibmittels und des erfindungsgemäßen Flammschutzmittels vor, während und/oder nach der Suspensionspolymerisation oder durch Einmischen eines Treibmittels in die Polymerschmelze und anschließende Extrusion und Granulierung unter Druck zu expandierbaren Granulaten (EPS) oder durch Extrusion und Entspannung unter Verwendung entsprechend geformter Düsen zu Schaumstoffplatten (XPS) oder Schaumstoffsträngen verarbeitet werden.

In einer bevorzugten Ausführungsform ist das Polymer ein expandierbares Polystyrol (EPS).

In einer weiteren bevorzugten Ausführungsform ist der Schaumstoff ein Styrolpolymerextrusionsschaumstoff (XPS).

Bevorzugt weisen expandierbare Styrolpolymere ein Molekulargewicht $M_w$ im Bereich von 120.000 bis 400.000 g/mol, besonders bevorzugt im Bereich von 150.000 bis 250.000 g/mol, gemessen mittels Gelpermeationschromatographie nach DIN 55672-1 mit refraktiometrischer Detektion (RI) gegenüber Polystyrolstandards, auf.

Die treibmittelhaltige Styrolpolymerschmelze enthält in der Regel ein oder mehrere Treibmittel in homogener Verteilung in einem Anteil von insgesamt 2 bis 10 Gew.-%, bevorzugt 3 bis 7 Gew.-%, bezogen auf die erfindungsgemäße Polymerzusammensetzung. Als Treibmittel, eignen sich die üblicherweise in EPS eingesetzten physikalischen Treibmittel, wie aliphatische Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt. Für XPS wird bevorzugt $CO_2$ oder dessen Mischung mit Alkoholen, und/oder $C_2$-$C_4$-Carbonylverbindungen, insbesondere Ketonen, eingesetzt. Ebenfalls verwendbar für XPS ist die Mischung von $CO_2$ mit aliphatischen Kohlenwasserstoffen mit 2 bis 5 Kohlenstoffatomen, insbesondere iso-Butan und/oder Ethern wie Dimethylether.

Zur Verbesserung der Verschäumbarkeit können feinverteilte Innenwassertröpfchen in die Styrolpolymermatrix eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischer oder statischer Mischer erreicht werden. In der Regel sind 0 bis 2 Gew.-%, bevorzugt 0,05 bis 1,5 Gew.-% Wasser, bezogen auf die Polymerzusammensetzung, ausreichend.

Expandierbare Styrolpolymere (EPS) mit mindestens 90% des Innenwassers in Form von Innenwassertröpfchen mit einem Durchmesser im Bereich von 0,5 bis 15 $\mu$m bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymere (EPS) ein Expansionsvermögen $\alpha$, definiert als Schüttdichte vor dem Verschäumen/Schüttdichte nach dem Verschäumen, von höchstens 125, bevorzugt von 20 bis 100, aufweisen.

Die erfindungsgemäßen expandierbaren Styrolpolymergranulate (EPS) weisen in der Regel eine Schüttdichte von höchstens 700 g/l bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Des Weiteren können der Styrolpolymerschmelze weitere Additive wie oben zuvor beschrieben, gemeinsam oder räumlich getrennt, zum Beispiel über Mischer oder Seitenextruder zugegeben werden. In der Regel werden Farbstoffe und Pigmente in Mengen im Bereich von 0,01 bis 10 Gew.-%, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein ein Dispergierhilfsmittel, zum Beispiel Organosilane, epoxygruppenhaltige Polymere oder Maleinsäureanhydrid-gepfropfte Styrolpolymere, einzusetzen. Bevorzugte Weichmacher sind Mineralöle, Phthalate, die in Mengen von 0,05 bis 10 Gew.-% eingesetzt werden können. Analog können diese Stoffe auch vor, während und/oder nach der Suspensionspolymerisation zu erfindungsgemäßem EPS zugegeben werden.

Zur Herstellung der erfindungsgemäßen expandierbaren Styrolpolymerisate nach dem Granulierungsverfahren kann das Treibmittel in die Polymerschmelze des Matrixpolymers eingemischt werden. Ein mögliches Verfahren umfasst die Stufen v1) Schmelzeerzeugung, v2) Mischen, v3) Kühlen, v4) Fördern und v5) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind zum Beispiel:

xi) Polymerisationsreaktor - statischer Mischer/Kühler - Granulator

xii) Polymerisationsreaktor - Extruder - Granulator

xiii) Extruder - statischer Mischer - Granulator

xiv) Extruder - Granulator

Weiterhin kann die Anordnung Seitenextruder zur Einbringung von Additiven, zum Beispiel von Feststoffen oder thermisch empfindlichen Zusatzstoffen aufweisen.

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polystyrolschmelze beheizt. Bevorzugt liegt die Temperatur der Düsenplatte im Bereich von 20 bis 100°C über der Temperatur der treibmittelhaltigen Polystyrolschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Besonders bevorzugt wird ein Verfahren zur Herstellung von halogenfrei flammgeschützten, expandierbaren Styrolpolymeren (EPS), umfassend die Schritte

s1) Einmischen eines organischen Treibmittels und 0,3 bis 10 Gew.-%, bezogen auf das Matrixpolymer, des erfindungsgemäßen Flammschutzmittels in die Polymerschmelze des Matrixpolymers mittels statischen oder dynamischen Mischer bei einer Temperatur von mindestens 150°C,

s2) Kühlen der treibmittelhaltigen Styrolpolymerschmelze auf eine Temperatur von mindestens 120°C,

s3) Austrag durch eine Düsenplatte mit Bohrungen, deren Durchmesser am Düsenaustritt höchstens 1,5 mm beträgt, und

s4) Granulieren der treibmittelhaltigen Schmelze direkt hinter der Düsenplatte unter Wasser bei einem Druck im Bereich von 1 bis 20 bar.

Bevorzugt ist es auch die erfindungsgemäßen, expandierbaren Styrolpolymere (EPS) durch Suspensionspolymerisation in wässriger Suspension in Gegenwart des erfindungsgemäßen Flammschutzmittels und eines organischen Treibmittels herzustellen.

Bei der Suspensionspolymerisation wird als Monomer bevorzugt Styrol allein eingesetzt. Es kann jedoch zu bis zu 20 % seines Gewichts durch andere ethylenisch ungesättigte Monomere, wie Alkylstyrole, Divinylbenzol, Acrylnitril, 1,1-Diphenylethen oder alpha-Methylstyrol ersetzt sein.

Bei der Suspensionspolymerisation können die üblichen Hilfsmittel, wie zum Beispiel Peroxidinitiatoren, Suspensionsstabilisatoren, Treibmittel, Kettenüberträger, Expandierhilfsmittel, Keimbildner und Weichmacher zugesetzt werden. Das erfindungsgemäße Flammschutzmittel wird bei der Polymerisation üblicherweise in Mengen von 0,3 bis 10 Gew.-%, vorzugsweise von 0,5 bis 5 Gew.-%, bezogen auf Monomer, zugesetzt. Treibmittel werden in Mengen von 2 bis 10 Gew.-%, bezogen auf Monomer zugesetzt. Man kann sie vor, während oder nach der Polymerisation der Suspension zusetzen. Geeignete Treibmittel sind zum Beispiel aliphatische Kohlenwasserstoffe mit 4 bis 6 Kohlenstoffatomen. Es ist vorteilhaft, als Suspensionsstabilisatoren anorganische Pickering-Dispergatoren, z.B. Magnesiumpyrophosphat oder Calciumphosphat einzusetzen.

Bei der Suspensionspolymerisation entstehen perlförmige, im Wesentlichen runde Teilchen mit einem mittleren Durchmesser im Bereich von 0,2 bis 2 mm.

Zur Verbesserung der Verarbeitbarkeit können die fertigen expandierbaren Styrolpolymergranulate durch Glycerinester, Antistatika oder Antiverklebungsmittel beschichtet werden.

Das EPS Granulat kann mit Glycerinmonostearat GMS (typischerweise 0,25 Gew.-Teilen), Glycerintristearat (typischerweise 0,25 Gew.-Teilen) feinteiliger Kieselsäure Aerosil R972 (typischerweise 0,12 Gew.-Teilen) und Zn-

Stearat (typischerweise 0,15 Gew.-Teilen), sowie Antistatikum beschichtet werden.

**[0138]** Die erfindungsgemäßen expandierbaren Styrolpolymergranulate können in einem ersten Schritt mittels Heißluft oder Wasserdampf zu Schaumpartikeln mit einer Dichte im Bereich von 5 bis 200 $kg/m^3$, insbesondere 10 bis 50 $kg/m^3$ vorgeschäumt und in einem zweiten Schritt in einer geschlossenen Form zu Partikelformteilen verschweißt werden.

**[0139]** Die expandierbaren Polystyrolteilchen können zu Polystyrolschaumstoffen mit Dichten von 8 bis 200 $kg/m^3$, bevorzugt von 10 bis 50 $kg/m^3$, verarbeitet werden. Hierzu werden die expandierbaren Partikel vorgeschäumt. Dies geschieht zumeist durch Erwärmen der Partikel mit Wasserdampf in sogenannten Vorschäumern. Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach dem Abkühlen können die Formteile entnommen werden.

**[0140]** In einer weiteren bevorzugten Ausführungsform ist der Schaumstoff ein extrudiertes Polystyrol (XPS), erhältlich durch:

(s1) Erhitzen des thermoplastischen Matrixpolymers, insbesondere Vinylaromathomo- oder copolymers, zur Ausbildung einer Polymerschmelze,
(s2) Einbringen einer Treibmittelkomponente in die Polymerschmelze zur Ausbildung einer schäumbaren Schmelze,
(s3) Extrusion der schäumbaren Schmelze in einen Bereich niedrigeren Drucks unter Aufschäumen zu einem Extrusionsschaum und
(s4) Zugabe des erfindungsgemäßen Flammschutzmittels sowie gegebenenfalls weiterer Additive in mindestens einem der Schritte (s1) und/oder (s2).

**[0141]** Die erfindungsgemäßen Schaumstoffe, insbesondere solche auf Basis von Styrolpolymeren wie EPS und XPS, eignen sich beispielsweise zur Verwendung als Dämm- und/oder Isolierstoffe, insbesondere in der Bauindustrie.

**[0142]** Erfindungsgemäße Schaumstoffe, insbesondere auf Basis von Styrolpolymeren, wie EPS und XPS, zeigen bevorzugt eine Verlöschzeit (Brandtest B2 nach DIN 4102 oder EN 11925-2 bei einer Schaumstoffdichte von 15 g/l und einer Ablagerungszeit von 72 h) von $\leq$ 15 sec, besonders bevorzugt $\leq$ 10 sec, und erfüllen damit die Bedingungen zum Bestehen des genannten Brandtests, solange die Flammenhöhe die in der Norm angegebene Messmarke nicht überschreitet.

**[0143]** Die Erfindung wird durch die nachfolgenden Beispiele und Ansprüche näher erläutert.

Beispiele

Messmethoden

**[0144]** Die gewichtsmittleren Molmassen $M_w$ wurden mittels Gelpermeationschromatographie (GPC) gemäß ISO 16014-3:2012 an Polystyrol-Gel-Säulen vom Typ Mixed B der Fa. Polymer Labs. mit monodispersen Polystyrolstandards bei Raumtemperatur und Tetrahydrofuran als Eluens bei 20°C bestimmt. Die korrekte Molmasse $M_w$ des Polybutadiens wird durch eine Mischeichung berechnet: $M_W(GPC) = M_{W\ absolut}(PS\text{-}Anteil) + M_{W\ absolut}(Butadienanteil) \times 1{,}72$
Der 1,2-Vinylgehalt wurde mittels FT-IR-Spektroskopie ermittelt.

<u>Herstellung der SBC-Blockcopolymere</u>

**[0145]** Lineare Styrol-Butadien-Triblockcopolymere gemäß Tabelle 1 (Beispiele 1, 2, 3A und 3B, sowie Vergleichsbeispiel 1 (V1)) wurden durch sequentielle anionische Polymerisation von Styrol und Butadien gemäß nachstehender Fahrweise erhalten. Bei dem Herstellungsprozess wurden die Reagenzien gemäß Tabelle 2 in den angegebenen Mengen eingesetzt.

**[0146]** Ein 10 Liter-Reaktorkessel wurde mit Cyclohexan und einigen ml BuLi über Nacht gerührt. Dann wurde mit frischem Cyclohexan/THF befüllt, 1 ml 1,1-Diphenylethylen zugegeben und bei 40°C bis zum Auftreten einer bleibenden schwachen Rotfärbung titriert. Danach wurden der Initiator (1,4-molares sek-BuLi in Cyclohexan) und das jeweilige Monomer (in der angegebenen Reihenfolge gemäß Tabelle 1) bei einer Temperatur von 55 bis 65°C zugegeben und jeweils bis zum vollständigen Umsatz (nach 15 Minuten) polymerisiert. Die Innentemperatur des Reaktorkessels wurde über das Mantelwasser eingestellt bzw. gehalten. Danach wurde mit Isopropanol terminiert. Der Kesselinhalt wurde in zwei 5 Liter-Kanister (mit Stickstoff gespült) abgelassen und mit Wasser und Trockeneis (1,0 % $CO_2$ + 0,5% $H_2O$, bezogen auf Feststoff) versetzt und kräftig geschüttelt.

**[0147]** Nach 5 min wurde die Stabilisatorlösung (0,2 % Sumilizer® GS + 0,2 % Irganox® 1010, bezogen auf Feststoff) als 10%ige Toluollösung zugegeben und nochmals geschüttelt.

**[0148]** Das eingesetzte Cyclohexan und das THF wurden zuvor bei Raumtemperatur über Aluminiumoxid-Perlen getrocknet, das Butadien wurde zuvor bei -10°C über Aluminiumoxid-Perlen (Trocknung jeweils ein Tag). Das Styrol

entstammt direkt der Styroldestillation der Styrolfabrik und wurde ohne weitere Reinigung eingesetzt.

Tabelle 1: Blockaufbau (Anteile in Gew.-%) der linearen Styrol-Butadien-Blockcopolymeren

| Beispiel | lineare Struktur | S1 Mw [g/mol] | B Mw [g/mol] | S2 Mw [g/mol] | S3 Mw [g/mol] | n [mol] | BD total [%] | Mw (Theorie) [g/mol] | Mw (GPC) PS-Eichung |
|---|---|---|---|---|---|---|---|---|---|
| V1 | S2-B-S2 | 23.000 | 94.000 | 23.000 | | | 67 | 140.000 | 215.000 |
| 1 | S1-B-S2 | 80.000 | 80.000 | 20.000 | | | 44 | 180.000 | 245.000 |
| 2 | S1-B-S2 | 120.000 | 120.000 | 30.000 | | | 44 | 270.000 | 370.000 |
| 3A | S1-S2-B-S3 | 100.000 | 120.000 | 20.000 | 20.000 | 1 | 46 | 260.000 | |
| 3B | S2-B-S3 | 0 | 120.000 | 20.000 | 20.000 | 2 | 75 | 160.000 | |
| 3 | | | | | | | 62,1 | 193.333 | 290.000 |

Beispiel 3 ist eine Mischung der linearen SBC-Blockcopolymere 3A (erfindungsgemäß) und 3B (nicht erfindungsgemäß) in den molaren Verhältnissen gemäß Tabelle 1.

Der in der Beschreibung als A bezeichnete Block entspricht den Polystyrolblöcken S2 und S3; Polystyrolblock S wird aus den Blöcken S1 und S2 gebildet; B ist ein Polybutadienblock bzw. die unbromierte Vorstufe des Blocks BB; BD gibt den Butadiengehalt des Blockcopolymeren an. Bei Beispiel 3 handelt es sich bei BD um den Mittelwert des Butadiengehalts der Mischung. Der 1,2-Vinylanteil der Butadieneinheiten in den Blockcopolymeren, der mittels $^1$H-NMR bestimmt wurde, lag jeweils bei 72%.

Tabelle 2: Verwendete Reagenzien für sequentielle anionische Polymerisation

| Beispiel | Maßeinheit | Cyclohexan | THF | Buli | S1 | B | S2 | S3 | Initiatorverhältnis | Edenol® D82 | Isopropanol |
|---|---|---|---|---|---|---|---|---|---|---|---|
| V1 | $M_w$ [g/mol]<br>mmol<br>[g]<br>[ml]<br>[%] | 3546<br>4547 | 186<br>209 | 11,43<br>8,16 | 23000<br>264<br>290<br>16,5 | 94000<br>1072<br>1637<br>67 | 23000<br>264<br>290<br>16,5 | - | | | mmol Buli x<br>1,5<br>0,88 |
| 1 | $M_w$ [g/mol]<br>mmol<br>[g]<br>[ml]<br>[%] | 3546<br>4547 | 186<br>209 | 8,89<br>6,35 | 80000<br>704<br>778<br>44 | 80000<br>704<br>1075<br>44 | 20000<br>192<br>212<br>12 | - | | | 0,68 |
| 2 | $M_w$ [g/mol]<br>mmol<br>[g]<br>[ml]<br>[%] | 3546<br>4547 | 186<br>209 | 5,93<br>4,23 | 120000<br>704<br>778<br>44 | 120000<br>704<br>1075<br>44 | 30000<br>192<br>212<br>12 | - | | | 0,46 |
| 3A<br><br><br><br><br>3B | $M_w$ [g/mol]<br>mmol<br>[g]<br>[ml]<br>[%]<br>$M_w$ [g/mol]<br>mmol<br>[g]<br>[ml]<br>[%] | 3546<br>4547 | 186<br>209 | 2,76<br>1,97<br><br><br>5,52<br>3,94 | 100000<br>275<br>304<br>17,19<br>0 | 120000<br>993,6<br>1517<br>62,1<br>120000 | 20000<br>165,7<br>183<br>10,36<br>20000 | 20000<br>-<br>165,7<br>183<br>10,36<br>20000 | 1<br><br>zu<br>2 | | 0,64 |
| | Buli gesamt | | | 8,28 | | | | | | | |
| 4<br>S1-S2-<br>B~ | $M_w$ [g/mol]<br>mmol<br>[g]<br>[ml] | 3546<br>4547 | 186<br>209 | 3,81<br>2,72 | 100000<br>381<br>421 | 60000<br>914,3<br>1396 | 20000<br>304,7<br>337 | - | 1 | | |

| Beispiel | Maßeinheit | Cyclohexan | THF | Buli | S1 | B | S2 | S3 | Initiatorverhältnis | Edenol® D82 | Isopropanol |
|---|---|---|---|---|---|---|---|---|---|---|---|
| S2-B~ | [%] | | | | 23,81 | 57,14 | 19,04 | | zu | | |
| | $M_w$ [g/mol] | | | | 0 | 60000 | 20000 | | | | |
| | mmol | | | 11,43 | | | | | 3 | | |
| | [g] | | | | | | | | | | |
| | [ml] | | | 8,16 | | | | | | 0,95 | 1,17 |
| | [%] | | | | | | | | | | |
| | Buli gesamt | | | 15,24 | | | | | | | |
| 5 S1-S2-B~ | $M_w$ [g/mol] | | | | 100000 | 80000 | 20000 | - | 1 | | |
| | mmol | | | 3,20 | | | | | | | |
| | [g] | 3546 | 186 | | 320 | 1024 | 256 | | | | |
| | [ml] | 4547 | 209 | 2,29 | 354 | 1563 | 282 | | | | |
| | [%] | | | | 20,0 | 64,0 | 16,0 | | zu | | |
| S2-B~ | $M_w$ [g/mol] | | | | 0 | 80000 | 20000 | | 3 | | |
| | mmol | | | 9,60 | | | | | | | |
| | [g] | | | | | | | | | | |
| | [ml] | | | 6,86 | | | | | | 0,80 | 0,99 |
| | [%] | | | | | | | | | | |
| | Buli gesamt | | | 12,80 | | | | | | | |

Sternförmige Styrol-Butadien-Blockcopolymere der Struktur [(S1-S2-B~)$_1$ (S2-B~)$_3$]-Z wurden durch sequentielle anionische Polymerisation von Styrol und Butadien gemäß der vorstehenden Fahrweise erhalten, wobei jedoch die Monomerzugabe in der Reihenfolge gemäß Tabelle 3 erfolgte und nach beendeter Polymerisation zunächst mit epoxidiertem Leinöl (Edenol® D82 der BASF SE (ehemals Cognis)) gekoppelt und dann mit Isopropanol terminiert wurde. Bei dem Herstellungsprozess wurden die Reagenzien gemäß Tabelle 2 in den angegebenen Mengen eingesetzt.

Tabelle 3 zeigt den Blockaufbau der einzelnen Sternäste der erhaltenen unsymmetrischen sternförmigen Triblockcopolymere der Beispiele 4 und 5.

Tabelle 3: Blockaufbau (Anteile in Gew.-%) der einzelnen Sternäste

| Beispiel | Sternaststruktur | S1 Mw [g/mol] | B Mw [g/mol] | S2 Mw [g/mol] | n | BD total [%] | Mw** [g/mol] | Mw(GPC)*** PS-Eichung |
|---|---|---|---|---|---|---|---|---|
| 4 | S1-S2-B~ | 100.000 | 60.000 | 20.000 | 1 | 33 | 180.000 | |
| | S2-B~ | 0 | 60.000 | 20.000 | 3 | 75 | 80.000 | |
| 4* | | | | | | 57,1 | 105.000 | 310.000 |
| 5 | S1-S2-B~ | 100.000 | 80.000 | 20.000 | 1 | 40 | 200.000 | |
| | S2-B~ | 0 | 80.000 | 20.000 | 3 | 80 | 100.000 | |
| 5* | | | | | | 64,0 | 125.000 | 380.000 |
| *Mittelwert; **Mw(Theorie) vor der Kopplung; ***Mw(GPC) Wert nach der Kopplung | | | | | | | | |

Der in der Beschreibung als A bezeichnete Block entspricht dem Polystyrolblock S2; Polystyrolblock S wird aus den Blöcken S1 und S2 gebildet; B ist ein Polybutadienblock bzw. die unbromierte Vorstufe des Blocks BB; BD gibt den Butadiengehalt der jeweiligen Sternäste des Blockcopolymeren an, und n ist die Anzahl der jeweiligen Sternäste.

Der 1,2-Vinylanteil der Butadieneinheiten in den Blockcopolymeren, der mittels $^1$H-NMR bestimmt wurde, lag jeweils bei 72%.

Die angegebene Molmasse Mw ist die Molmasse der Sternäste vor der Kopplung. Bedingt dadurch, dass es sich bei den nach der Kopplung erhaltenen Sternpolymeren um eine statistische Mischung von Sternpolymeren mit einer verschiedenen Anzahl von Ästen handelt, die Kopplungsausbeute nur ca. 70% beträgt und die (gekoppelten) Sternpolymere gegenüber den einzelnen Sternästen ein reduziertes hydrodynamisches Volumen aufweisen, wird die Molmasse des (gekoppelten) sternförmigen Blockcopolymeren, basierend auf empirischer Erfahrung, durch folgende Berechnung erhalten:

$$Mw \text{ (gekoppelt)} = Mw \text{ (vor der Kopplung)} \times 2,1$$

Herstellung Br-SBC-Blockcopolymer

Allgemeine Beschreibung:

In einem 2 I-Rundkolben mit Rückflusskühler, Rührer und Stickstoffüberlagerung werden 30 g des jeweiligen SBC-Blockcopolymers in 350 ml Methylenchlorid gelöst. Als Bromierungsmittel wird Tetrabutylammoniumtribromid (TBAT; Sigma Aldrich) hinzugegeben. Die molare Menge des TBATs wird an die molare Menge der Butadieneinheiten angepasst (1:1-Stöchiometrie). Die Mischung wird 6 h mittels eines Wasserbades unter Rückfluss gehalten. Nach Abkühlen auf Raumtemperatur werden 200 ml Toluol hinzugegeben und anschließend 300 ml Wasser. Die Wasserphase wird abgetrennt und die organische Phase mit 300 ml einer 25 %igen (w/w) Natriumchloridlösung gewaschen die zusätzlich 3 g Natriumhydrogensulfit enthält. Das Br-SBC-Blockcopolymer wird durch das Eintragen der organischen Lösung in das fünffache Volumen Methanol ausgefällt. Das ausgefallene Br-SBC-Blockcopolymer wird abfiltriert und unter Vakuum bei 50 °C bis zur Gewichtskonstanz getrocknet.

Der Bromgehalt der erhaltenen Br-SBC-Copolymere (s. Tabelle 4) wurde mittels Elementaranalytik (TE Instrumets Xplorer) bestimmt.

Tabelle 4: Bromgehalt der erhaltenen Br-SBC Blockcopolymere

| Beispiel | SBC-Blockcopolymer | Bromgehalt des Br-SBC-Blockcopolymers in % (w/w) |
|---|---|---|
| V6 | V1 | 65 |
| 7 | 1 | 55 |
| 8 | 2 | 55 |
| 9 | 3 | 65 |
| 10 | 4* | 65 |
| 11 | 5* | 67 |

Herstellung der Polymerzusammensetzungen

Für die Herstellung der jeweiligen Polymerzusammensetzung (s. Beispiele 13 bis 17, sowie V12) werden 2,6 g Benzoylperoxid (Perkadox® L-W75 der Firma Akzo Nobel) und 19,9 g Dicumylperoxid (Perkadox® BC-FF der Firma Akzo Nobel) in 3700 g Styrol gelöst. Dazu wird die in Tabelle 5 angegebene Menge an Br-SBC Blockcopolymer gegeben. Ziel ist es einen gleichen Bromgehalt in allen Polymerzusammensetzungen zu erhalten. Diese organische Phase wird in 4380 g vollentsalztes Wasser in einem 10 l-Rührkessel eingetragen. Die wässrige Phase enthält zudem 8,1 g Magnesiumpyrophosphat (hergestellt aus Natriumpyrophosphat und Magnesiumsulfat). Die Mischung wird unter Rühren innerhalb von 1,75 h auf 104°C erhitzt und anschließend innerhalb von 5,5 h auf 136°C. 1,8 h nach Erreichen von 80°C werden 18 g einer 2%-igen Lösung von Emulgator E30 (Mersolat® H40 der Firma Lanxess) zudosiert. Nach einer weiteren Stunde werden 270 g Pentan (Exxsol® Pentane 80 der Firma ExxonMobil) hinzudosiert. Anschließend wird noch 1 Stunde bei der Endtemperatur von 136°C auspolymerisiert. Die erhaltene Polymerzusammensetzung wird abdekantiert und getrocknet.

Anschließend werden die erhaltenen Polymerperlen mit 0,3% (w/w) einer Mischung aus 60% (w/w) Glycerintristearat (Softenol® 3168 der Firma IOI Oleo) 30% (w/w) Glycerinmonostearat (Softenol® 3995 der Firma IOI Oleo) und 10% (w/w) Zinkstearat (Zincum® 5 der Firma Baerlocher) beschichtet.

Das gewichtsmittlere Molekulargewicht Mw der Polymerzusammensetzung wird mittels GPC bestimmt.

Tabelle 5: Rezepturen und Ergebnisse der Versuche zur Herstellung der Polymerzusammensetzung

| Beispiel | Br-SBC-Blockcopolymer | Menge an Br-SBC-Blockcoplymer ing | Mw der Polymerzusammensetzung in g/mol |
|---|---|---|---|
| V12 | V6 | 25,0 | 182 000 |
| 13 | 7 | 29,5 | 178 000 |
| 14 | 8 | 29,5 | 175 000 |
| 15 | 9 | 25,0 | 184 000 |
| 16 | 10 | 25,0 | 172 000 |
| 17 | 11 | 24,3 | 186 000 |

Herstellung Schaumstoff

Durch Einwirkung von strömendem Wasserdampf wurden die treibmittelhaltigen Polymerperlen der Beispiele 13 bis 17 sowie V12 vorgeschäumt und nach 12 h Lagerung durch eine weitere Behandlung mit Wasserdampf in einer geschlossenen Form zu Schaumstoffblöcken einer Dichte von ca. 15 kg/m$^3$ verschweißt.

Die Ermittlung des Brandverhaltens erfolgte nach Konditionierung laut EN 13238 an 20 mm dicken Proben nach EN 11925-2 mit 15 s Kantenbeflammung.
Die Wärmeleitfähigkeit der Proben wurde nach EN 12667 bestimmt.
Die mittlere Zellgröße wurde durch mikroskopische Vermessung bestimmt.
Die Ergebnisse sind in Tabelle 6 zusammengefasst.

Tabelle 6: Ergebnisse der Analytik der Schaumstoffproben

| Beispiel | Dichte in kg/m$^3$ | Brandklasse nach EN 13501-1 | WLF in mW/(m*K) | Mittlere Zellgröße in $\mu$m |
|---|---|---|---|---|
| V12 | 15,1 | E | 39,2 | 90 |
| 13 | 14,8 | E | 38,2 | 170 |
| 14 | 15,2 | E | 37,6 | 160 |
| 15 | 14,8 | E | 38,0 | 190 |
| 16 | 15,2 | E | 37,7 | 150 |
| 17 | 14,9 | E | 37,9 | 160 |

Anhand der niedrigen Zellgröße im Vergleichsbeispiel V12 erkennt man die nukleierende Wirkung eines Br-SBC-Triblockcopolymers gemäß dem Stand der Technik im Vergleich zu den erfindungsgemäßen Br-SBC-Blockcopolymeren (Beispiele 13 bis 17).

Analog ergeben sich bei den erfindungsgemäßen Beispielen deutlich bessere (niedrigere) Wärmeleitfähigkeiten.

**Patentansprüche**

1.  Bromierte Vinylaromat-Dien-Blockcopolymere (Br-SBC), enthaltend mindestens einen Vinylaromatpolymerblock S, insbesondere Polystyrolblock, und mindestens einen bromierten Dienpolymerblock BB, **dadurch gekennzeichnet, dass**

    • vor der Bromierung die gewichtsmittlere Molmasse $M_w$, des Blocks S gleich oder größer als $M_w$ des Blocks BB ist;
    • die Molmasse $M_w$ des Blocks BB, vor der Bromierung, 50.000 bis 130.000 g/mol beträgt, und
    • die Molmasse $M_w$ des Blocks S 60.000 bis 300.000 g/mol beträgt, wobei die Bestimmung der Molmasse $M_w$ mittels GPC gemäß ISO 16014-3:2012 relativ zu Polystyrolstandards bei 25°C in THF vor der Bromierung erfolgt.

2.  Bromierte Vinylaromat-Dien-Blockcopolymere gemäß Anspruch 1, **dadurch gekennzeichnet, dass** die Blockcopolymere eine lineare Struktur der Formel

    K-S-BB-A            (Ia)

    besitzen, worin
    K und A, jeweils unabhängig voneinander, nicht vorhanden oder ein von S und BB verschiedener Vinylaromat(co)polymerblock sind; die Molmasse $M_w$ der Blöcke K und A jeweils kleiner als $M_w$ des Blocks BB ist.

3.  Bromierte Vinylaromat-Dien-Blockcopolymere gemäß Anspruch 2, **dadurch gekennzeichnet, dass** die Blöcke K und A - unabhängig voneinander - eine Molmasse $M_w$ im Bereich von 15.000 bis 35.000 g/mol aufweisen.

4.  Bromierte Vinylaromat-Dien-Blockcopolymere gemäß Anspruch 2 oder 3, worin der Block A und/oder der Block K ein Polystyrolblock ist.

5.  Bromierte Vinylaromat-Dien-Blockcopolymere gemäß einem der Ansprüche 2 bis 4, worin K nicht vorhanden ist.

6.  Bromierte Vinylaromat-Dien-Blockcopolymere gemäß Anspruch 2, worin K und A nicht vorhanden sind.

7.  Bromierte Vinylaromat-Dien-Blockcopolymere gemäß Anspruch 1, **dadurch gekennzeichnet, dass** die Blockcopolymere eine sternförmige Struktur der Formel Z- $[(P)_p(Q)_q(R)_r...]_m$ (Ib), worin
    Z = Rest eines polyfunktionellen Kopplungsmittels oder Initiators;
    P, Q, R ...verschiedene Sternäste sind, wobei mindestens einer der Sternäste P, Q oder R, einen Vinylaromatpolymerblock S und einen bromierten Dienpolymerblock BB enthält;
    p, q, r = natürliche Zahlen $\geq$ 0; und m = Summe der Sternäste bzw. der Indizes p, q, r ...,
    wobei m eine natürliche Zahl von 2 bis 10, vorzugsweise 3 bis 5, insbesondere 3 oder 4 ist.

**8.** Bromierte Vinylaromat-Dien-Blockcopolymere gemäß Anspruch 7, **dadurch gekennzeichnet, dass** p = 1 oder 2, vorzugsweise p = 1;
Sternast P die Struktur ~BB-S oder ~A-BB-S; und die Sternäste Q und R unabhängig voneinander die Struktur ~A-BB, ~S, ~BB, und/oder ~BB-A aufweisen;
worin ~ die Bindungsstelle an den Rest Z, und A ein von S und BB verschiedener Vinylaromat(co)polymerblock mit einer Molmasse $M_w$ kleiner als $M_w$ des Blocks BB, ist.

**9.** Bromierte Vinylaromat-Dien-Blockcopolymere gemäß Anspruch 8, worin P = ~BB-S, Q = ~BB-A, r = 0, m = 3 bis 10, insbesondere 3 bis 5, und A ein Vinylaromat(co)polymerblock, insbesondere Polystyrolblock ist.

**10.** Mischung enthaltend
α) mindestens ein lineares bromiertes Vinylaromat-Dien-Blockcopolymer gemäß einem der Ansprüche 2 bis 6, und
β) mindestens ein, bevorzugt ein, weiteres - davon verschiedenes - bromiertes Dien/Vinylaromat-Copolymer, insbesondere Br-SBC-Blockcopolymer, enthaltend mindestens einen bromierten Dienpolymerblock BB, mindestens einen Vinylaromatpolymerblock A und keinen Vinylaromatpolymerblock S und die Molmasse $M_w$ des Blocks A jeweils kleiner als $M_w$ des Blocks BB ist; oder Mischung enthaltend
α) mindestens ein lineares bromiertes Vinylaromat-Dien-Blockcopolymer gemäß einem der Ansprüche 2 bis 6, und
β) mindestens ein, bevorzugt ein, weiteres - davon verschiedenes - bromiertes Dien/Vinylaromat-Copolymer, insbesondere Br-SBC-Blockcopolymer, wie zuvor beschrieben, und
γ) mindestens ein bromiertes Polybutadien-Homopolymer (Br-PBD), dessen gewichtsmittlere Molmasse $M_w$ - vor der Bromierung - gleich oder kleiner als $M_w$ des Blocks BB ist.

**11.** Mischung gemäß Anspruch 10, worin γ) nicht vorhanden und β) ein lineares Br-SBC-Blockcopolymer der Struktur H-BB-A (Ic) ist, worin H ein Vinylaromatpolymerblock ist, und die Molmasse $M_w$ (oder Blocklänge) des Blocks H kleiner als $M_w$ des Blocks BB ist.

**12.** Verfahren zur Herstellung von bromierten Vinylaromat-Dien-Blockcopolymeren gemäß einem der Ansprüche 1 bis 9, umfassend Schritte a) bis d):

a) Herstellung mindestens eines linearen oder sternförmigen Vinylaromat-Dien-Blockcopolymers (SBC), enthaltend mindestens einen Vinylaromatpolymerblock S, insbesondere Polystyrolblock, und mindestens einen Dienpolymerblock B (= unbromierte Vorstufe des Blocks BB), durch sequentielle anionische Polymerisation, wobei die gewichtsmittlere Molmasse $M_w$ des Blocks S gleich oder größer als $M_w$ des Blocks BB ist;
b) Bereitstellen einer homogenen Reaktionslösung enthaltend das in Schritt a) erhaltene SBC, mindestens ein Bromierungsmittel und mindestens ein Lösungsmittel;
c) Bromierung von mehr als 50 % der nicht-aromatischen Doppelbindungen des SBC-Blockcopolymers, bezogen auf den nicht-aromatischen Doppelbindungsgehalt des SBC-Blockcopolymers vor der Bromierung; und
d) Isolation des in Schritt c) erhaltenen Br-SBC-Blockcopolymers.

**13.** Verwendung der bromierten Vinylaromat-Dien-Blockcopolymere gemäß einem der Ansprüche 1 bis 9 oder deren Mischungen gemäß Anspruch 10 oder 11 als Flammschutzmittel.

**14.** Polymerzusammensetzungen enthaltend mindestens ein ungeschäumtes oder geschäumtes thermoplastisches Polymer, insbesondere Vinylaromathomo- oder copolymer, und mindestens ein bromiertes Vinylaromat-Dien-Blockcopolymer gemäß einem der Ansprüche 1 bis 9 oder dessen Mischungen gemäß Anspruch 10 oder 11 als Flammschutzmittel.

**15.** Polymerzusammensetzung gemäß Anspruch 14, worin als ungeschäumtes oder geschäumtes thermoplastisches Polymer ein Vinylaromathomo- oder copolymer, vorzugsweise Styrolhomo- oder copolymer wie GPPS oder SAN, eingesetzt wird, und die Molmasse $M_w$ des S-Blocks des bromierten Vinylaromat-Dien-Blockcopolymers 30 bis 70 % der gewichtsmittleren Molmasse $M_w$ des Vinylaromathomo- oder copolymers beträgt.

**16.** Expandierte oder extrudierte Schaumstoffe, insbesondere EPS oder XPS-Schaumstoffe, aus den Polymerzusammensetzungen gemäß den Ansprüchen 14 oder 15.

**17.** Verwendung der Schaumstoffe gemäß Anspruch 16, insbesondere EPS oder XPS, als Dämm- und/oder Isoliermaterial.

**Claims**

1. A brominated vinylaromatic-diene block copolymer (Br-SBC) comprising at least one vinylaromatic polymer block S, in particular polystyrene block, and at least one brominated diene polymer block BB, wherein

    • before bromination the weight-average molar mass $M_w$ of the block S is greater than or equal to $M_w$ of the block BB,
    • the molar mass $M_w$ of the block BB, before bromination, is from 50 000 to 130 000 g/mol, and
    • the molar mass $M_w$ of the block S is from 60 000 to 300 000 g/mol,

    wherein the molar mass $M_w$ is determined by means of GPC in accordance with ISO 16014-3:2012 relative to polystyrene standards at 25°C in THF before bromination.

2. The brominated vinylaromatic-diene block copolymer according to claim 1,
    wherein the block copolymer has a linear structure of the formula K-S-BB-A (Ia), in which
    K and A, respectively mutually independently, are absent or are a vinylaromatic (co)polymer block different from S and BB; and
    the molar mass $M_w$ of the blocks K and A is respectively smaller than $M_w$ of the block BB.

3. The brominated vinylaromatic-diene block copolymer according to claim 2,
    wherein the molar mass $M_w$ of the blocks K and A - mutually independently - is in the range from 15 000 to 35 000 g/mol.

4. The brominated vinylaromatic-diene block copolymer according to claim 2 or 3, in which the block A and/or the block K is a polystyrene block.

5. The brominated vinylaromatic-diene block copolymer according to any of claims 2 to 4, in which K is absent.

6. The brominated vinylaromatic-diene block copolymer according to claim 2, in which K and A are absent.

7. The brominated vinylaromatic-diene block copolymer according to claim 1,
    wherein the block copolymer a star-shaped structure of the formula $Z-[(P)_p(Q)_q(R)_r...]_m$ (Ib), in which
    Z = moiety of a polyfunctional coupling agent or initiator;
    P, Q, R ... are various star branches, where at least one of the star branches P, Q or R comprises a vinylaromatic polymer block S and a brominated diene polymer block BB;
    p, q, r = natural numbers $\geq$ 0; and m = total number of star branches or sum of the indices p, q, r ..., where m is a natural number from 2 to 10, preferably from 3 to 5, in particular 3 or 4.

8. The brominated vinylaromatic-diene block copolymer according to claim 7,
    wherein p = 1 or 2, preferably p = 1;
    star branch P has the structure ~BB-S or ~A-BB-S; and the star branches Q and R mutually independently have the structure ~A-BB, ~S, ~BB, and/or ~BB-A;
    in which ~ is the location of bonding to the moiety Z, and A is a vinylaromatic (co)polymer block which differs from S and BB and has a molar mass $M_w$ smaller than $M_w$ of the block BB.

9. The brominated vinylaromatic-diene block copolymer according to claim 8, in which P = ~BB-S, Q = ~BB-A, r = 0, m = from 3 to 10, in particular from 3 to 5, and A is a vinylaromatic (co)polymer block, in particular polystyrene block.

10. A mixture comprising
    $\alpha$) at least one linear brominated vinylaromatic-diene block copolymer according to any of claims 2 to 6, and
    $\beta$) at least one, preferably one, other brominated diene/vinylaromatic copolymer different therefrom, in particular Br-SBC block copolymer, comprising at least one brominated diene polymer block BB, at least one vinylaromatic polymer block A and no vinylaromatic polymer block S, and
    the molar mass $M_w$ of the block A is respectively smaller than $M_w$ of the block BB; or a mixture comprising
    $\alpha$) at least one linear brominated vinylaromatic-diene block copolymer according to any of claims 2 to 6, and
    $\beta$) at least one, preferably one, other brominated diene/vinylaromatic copolymer different therefrom, in particular Br-SBC block copolymer, as described above, and

γ) at least one brominated polybutadiene homopolymer (Br-PBD), the weight-average molar mass $M_w$ of which - before bromination - is smaller than or equal to $M_w$ of the block BB.

11. The mixture according to claim 10, in which γ) is absent and β) is a linear Br-SBC block copolymer of the structure H-BB-A (Ic), in which H is a vinylaromatic polymer block, and the molar mass $M_w$ (or block length) of the block H is smaller than $M_w$ of the block BB.

12. A process for the production of brominated vinylaromatic-diene block copolymer according to any of claims 1 to 9, comprising steps a) to d):

a) production of at least one linear or star-shaped vinylaromatic-diene block copolymer (SBC) comprising at least one vinylaromatic polymer block S, in particular polystyrene block, and at least one diene polymer block B (= unbrominated precursor of the block BB) by sequential anionic polymerization, where the weight-average molar mass $M_w$ of the block S is greater than or equal to $M_w$ of the block BB;
b) provision of a homogeneous reaction solution comprising the SBC obtained in step a), at least one brominating agent and at least one solvent;
c) bromination of more than 50% of the nonaromatic double bonds of the SBC block copolymer, based on the nonaromatic double bond content of the SBC block copolymer before bromination; and
d) isolation of the Br-SBC block copolymer obtained in step c).

13. The use of the brominated vinylaromatic-diene block copolymer according to any of claims 1 to 9 or a mixture thereof according to claim 10 or 11 as flame retardant.

14. A polymer composition comprising at least one unfoamed or foamed thermoplastic polymer, in particular vinylaromatic homo- or copolymer, and at least one brominated vinylaromatic-diene block copolymer according to any of claims 1 to 9 or a mixture thereof according to claim 10 or 11 as flame retardant.

15. The polymer composition according to claim 14, in which unfoamed or foamed thermoplastic polymer used comprises a vinylaromatic homo- or copolymer, preferably styrene homo- or copolymer, for example GPPS or SAN, and the molar mass $M_w$ of the S-block of the brominated vinylaromatic-diene block copolymer is from 30 to 70% by weight of the weight-average molar mass $M_w$ of the vinylaromatic homo- or copolymer.

16. An expanded or extruded foam, in particular EPS or XPS foam, made of the polymer composition according to claim 14 or 15.

17. The use of the foam according to claim 16, in particular EPS or XPS, as insulation material.

**Revendications**

1. Copolymères à blocs de composé aromatique vinylique-diène bromés (Br-SBC), contenant au moins un bloc de polymère S de type composé aromatique vinylique, en particulier un bloc de polystyrène, et au moins un bloc de polymère BB de type diène bromé,
**caractérisés en ce que**

• avant la bromation, la masse molaire moyenne en poids $M_w$ du bloc S est supérieure ou égale à la $M_w$ du bloc BB ;
• la masse molaire $M_w$ du bloc BB, avant la bromation, est de 50 000 à 130 000 g/mole, et
• la masse molaire $M_w$ du bloc S est de 60 000 à 300 000 g/mole,

la détermination de la masse molaire $M_w$ étant réalisée avant la bromation au moyen d'une CPG selon la norme ISO 16014-3:2012 par rapport à des références de polystyrène à 25 °C dans le THF.

2. Copolymères à blocs de composé aromatique vinylique-diène bromés selon la revendication 1, **caractérisés en ce que** les copolymères à bloc possèdent une structure linéaire de formule

K-S-BB-A            (Ia),

dans laquelle

K et A, à chaque fois indépendamment l'un de l'autre, ne sont pas présents ou sont un bloc de (co)polymère de type composé aromatique vinylique différent de S et de BB ; et

la masse molaire $M_w$ des blocs K et A est à chaque fois inférieure à la $M_w$ du bloc BB.

3. Copolymères à blocs de composé aromatique vinylique-diène bromés selon la revendication 2, **caractérisés en ce que** les blocs K et A - indépendamment l'un de l'autre - présentent une masse molaire $M_w$ dans la plage de 15 000 à 35 000 g/mole.

4. Copolymères à blocs de composé aromatique vinylique-diène bromés selon la revendication 2 ou 3, dans lesquels le bloc A et/ou le bloc K est un bloc de polystyrène.

5. Copolymères à blocs de composé aromatique vinylique-diène bromés selon l'une quelconque des revendications 2 à 4, dans lesquels K n'est pas présent.

6. Copolymères à blocs de composé aromatique vinylique-diène bromés selon la revendication 2, dans lesquels K et A ne sont pas présents.

7. Copolymères à blocs de composé aromatique vinylique-diène bromés selon la revendication 1, **caractérisés en ce que** les copolymères à blocs une structure en forme d'étoile de formule Z-[(P)$_p$(Q)$_q$(R)$_r$...]$_m$ (Ib), dans laquelle Z = radical d'un agent de couplage polyfonctionnel ou d'un initiateur polyfonctionnel ;

P, Q, R... sont diverses branches d'étoile, au moins l'une des branches d'étoile P, Q ou R contenant un bloc de polymère S de type composé aromatique vinylique et un bloc de polymère BB de type diène bromé ; p, q, r = nombres entiers $\geq 0$ ; et m = somme des branches d'étoile respectivement des indices p, q, r..., m étant un nombre naturel de 2 à 10, de préférence 3 à 5, en particulier 3 ou 4.

8. Copolymères à blocs de composé aromatique vinylique-diène bromés selon la revendication 7, **caractérisés en ce que** p = 1 ou 2, de préférence p=1;

la branche d'étoile P présente la structure ~BB-S ou ~A-BB-S ; et les branches d'étoile Q et R présentent indépendamment l'une de l'autre la structure ~A-BB, ~S, ~BB, et/ou ~BB-A ;

dans lesquelles ~ est l'emplacement de liaison au radical Z, et A est un bloc de (co)polymère de type composé aromatique vinylique différent de S et de BB doté d'une masse molaire $M_w$ inférieure à la $M_w$ du bloc BB.

9. Copolymères à blocs de composé aromatique vinylique-diène bromés selon la revendication 8, dans lesquels P = ~BB-S, Q = ~BB-A, r = 0, m = 3 à 10, en particulier 3 à 5, et A est un bloc de (co)polymère de type composé aromatique vinylique, en particulier un bloc de polystyrène.

10. Mélange contenant

α) au moins un copolymère à blocs de composé aromatique vinylique-diène bromé linéaire selon l'une quelconque des revendications 2 à 6, et

β) au moins un, préférablement un, copolymère de diène/composé aromatique vinylique bromé supplémentaire - différent de celui-ci, en particulier un copolymère à blocs Br-SBC, contenant au moins un bloc de polymère BB de type diène bromé, au moins un bloc de polymère A de type composé aromatique vinylique et aucun bloc de polymère S de type composé aromatique vinylique et la masse molaire $M_w$ du bloc A étant à chaque fois inférieure à la $M_w$ du bloc BB ; ou mélange contenant

α) au moins un copolymère à blocs de composé aromatique vinylique-diène bromé linéaire selon l'une quelconque des revendications 2 à 6, et β) au moins un, préférablement un, copolymère de diène/composé aromatique vinylique bromé supplémentaire - différent de celui-ci, en particulier un copolymère à blocs Br-SBC, comme décrit précédemment, et

γ) au moins un homopolymère de type polybutadiène bromé (Br-PBD), dont la masse molaire moyenne en poids $M_w$ - avant la bromation - est inférieure ou égale à la $M_w$ du bloc BB.

11. Mélange selon la revendication 10, γ) n'étant pas présent et β) étant un copolymère à bloc Br-SBC linéaire de structure H-BB-A (Ic), dans laquelle H est un bloc de polymère de type composé aromatique vinylique, et la masse molaire $M_w$ (ou longueur de bloc) du bloc H est inférieure à la $M_w$ du bloc BB.

12. Procédé pour la préparation de copolymères à blocs de composé aromatique vinylique-diène bromés selon l'une quelconque des revendications 1 à 9, comprenant les étapes a) à d) :

a) préparation d'au moins un copolymère à blocs de composé aromatique vinylique-diène (SBC) linéaire ou en forme d'étoile, contenant au moins un bloc de polymère S de type composé aromatique vinylique, en particulier un bloc de polystyrène, et au moins un bloc de polymère B de type diène (= précurseur non bromé du bloc BB), par polymérisation anionique séquentielle, la masse molaire moyenne en poids $M_w$ du bloc S étant supérieure ou égale à la $M_w$ du bloc BB ;

b) mise à disposition d'une solution de réaction homogène contenant le SBC obtenu dans l'étape a), au moins un agent de bromation et au moins un solvant ;

c) bromation de plus de 50 % des doubles liaisons non aromatiques du copolymère à blocs SBC, par rapport à la teneur en doubles liaisons non aromatiques du copolymère à blocs SBC avant la bromation ; et

d) isolement du copolymère à blocs Br-SBC obtenu dans l'étape c).

13. Utilisation des copolymères à blocs de composé aromatique vinylique-diène bromés selon l'une quelconque des revendications 1 à 9 ou de leurs mélanges selon la revendication 10 ou 11 en tant qu'agent ignifugeant.

14. Compositions de polymère contenant au moins un polymère thermoplastique non moussé ou moussé, en particulier un homopolymère ou copolymère de composé aromatique vinylique, et au moins un copolymère à blocs de composé aromatique vinylique-diène bromé selon l'une quelconque des revendications 1 à 9 ou ses mélanges selon la revendication 10 ou 11 en tant qu'agent ignifugeant.

15. Composition de polymère selon la revendication 14, dans laquelle, en tant que polymère thermoplastique non moussé ou moussé, un homopolymère ou copolymère de composé aromatique vinylique, de préférence un homopolymère ou copolymère de styrène comme un GPPS ou un SAN, est utilisé et la masse molaire $M_w$ du bloc S du copolymère à blocs de composé aromatique vinylique-diène bromé représente 30 à 70 % de la masse molaire moyenne en poids $M_w$ de l'homopolymère ou copolymère de composé aromatique vinylique.

16. Mousse expansée ou extrudée, en particulier mousse de type EPS ou XPS, composée des compositions de polymère selon les revendications 14 ou 15.

17. Utilisation des mousses selon la revendication 16, en particulier de type EPS ou XPS, en tant que matériau isolant et/ou d'isolation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 137308
- DE OS1301497 A
- WO 2007058736 A
- WO 2008021417 A
- WO 2015065393 A
- EP 3070118 A1
- WO 2016123263 A
- GB 1472195 A

**In der Beschreibung aufgeführte Nicht-Patentliteratur**

- **BEACH et al.** *Polymer Degradation and Stability,* 2017, vol. 135, 99-110
- Polystyrol. Kunststoffhandbuch. Carl-Hanser-Verlag, 1996, vol. 4, 104 ff
- Modern Styrenic Polymers: Polystyrenes and Styrenic Copolymers. Wiley, 2003, 27-29